(19) Europäisches Patentamt
European Patent Office
Office européen des brevets

(11) EP 1 396 495 B1

(12) EUROPÄISCHE PATENTSCHRIFT

(45) Veröffentlichungstag und Bekanntmachung des Hinweises auf die Patenterteilung:
**17.01.2007 Patentblatt 2007/03**

(51) Int Cl.:
***C07F 17/00*** *(2006.01)* ***C08F 10/00*** *(2006.01)*

(21) Anmeldenummer: **03026592.0**

(22) Anmeldetag: **18.11.1999**

# (54) Metallocenmonohalogenide

Metallocenes with a single halogenide attached to the metal

Métallocènes comprenant un unique halogénure lié au métal

(84) Benannte Vertragsstaaten:
**AT BE CH CY DE DK ES FI FR GB GR IE IT LI LU MC NL PT SE**

(30) Priorität: **25.11.1998 DE 19854350**

(43) Veröffentlichungstag der Anmeldung:
**10.03.2004 Patentblatt 2004/11**

(62) Dokumentnummer(n) der früheren Anmeldung(en) nach Art. 76 EPÜ:
**99956012.1 / 1 049 705**

(73) Patentinhaber: **Basell Polyolefine GmbH**
**50389 Wesseling (DE)**

(72) Erfinder:
- **Bingel, Carsten**
  **67105 Schifferstadt (DE)**
- **Brintzinger Hans-Herbert**
  **8274 Tägerwilen (CH)**
- **Damrau, Hans-.Robert**
  **78462 Konstanz (DE)**
- **Müller, Patrik**
  **67071 Ludwigshafen (DE)**
- **Suhm, Jürgen**
  **67551 Worms (DE)**

(56) Entgegenhaltungen:
- **CHEMICAL ABSTRACTS, vol. 126, no. 20, 19. Mai 1997 (1997-05-19) Columbus, Ohio, US; abstract no. 264146, SCHMIDT, KATRIN ET AL: "Photochemical Isomerization of Me2Si-Bridged Zirconocene Complexes. Application to Stereoselective Syntheses of ansa-Zirconocene Binaphtholat Stereoisomers" XP002128401 & ORGANOMETALLICS (1997), 16(8), 1724-1728,**
- **CHEMICAL ABSTRACTS, vol. 117, no. 17, 26. Oktober 1992 (1992-10-26) Columbus, Ohio, US; abstract no. 171616, WANG, YING ET AL: "Reactions of sila-bridged biscyclopentadienyl IVB group metal dichlorides" XP002128402 & YOUJI HUAXUE (1992), 12(3), 286-90,**
- **DORMOND, A. ET AL: "Dynamic stereochemistry of titanium(III).fwdarw. titanium(IV) transformation for complexes with 2 cyclopentadienyl ligands" J. ORGANOMET. CHEM. (1979), 165(3), 319-27, XP002128396**
- **DORMOND, ALAIN ET AL: "Aryloxy complexes of dicyclopentadienyltitanium(III) derivatives" J. ORGANOMET. CHEM. (1977), 125(1), 63-9, XP002128397**
- **DORMOND, A. ET AL: "Pseudotetrahedral complexes of titanium with metal-centered chirality" J. ORGANOMET. CHEM. (1975), 101(1), 71-84, XP002128398**
- **CHEMICAL ABSTRACTS, vol. 83, no. 1, 7. Juli 1975 (1975-07-07) Columbus, Ohio, US; abstract no. 10328, DORMOND, ALAIN ET AL: "Diastereoisomerism in the titanocene series. Synthesis of diastereoisomers with a chiral element on the trimethylene group of a bridged structure" XP002128403 & C. R. HEBD. SEANCES ACAD. SCI., SER. C (1975), 280(7), 477-9,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 396 495 B1

## Beschreibung

Die vorliegende Erfindung betrifft speziell substituierte Metallocene, ein Verfahren zu ihrer Herstellung sowie deren Verwendung in der Polymerisation von Olefinen.

Metallocene können, gegebenenfalls in Kombination mit einem oder mehreren Co-Katalysatoren, als Katalysatorkomponente für die Polymerisation und Copolymerisation von Olefinen verwendet werden. Insbesondere werden als Katalysatorvorstufen halogenhaltige Metallocene eingesetzt, die sich beispielsweise durch ein Aluminoxan in einen polymerisationsaktiven kationischen Metallocenkomplex überführen lassen (EP-A-129368).

Die Herstellung von Metallocenen ist an sich bekannt (US 4,752,597; US 5,017,714; EP-A-320762; EP-A-416815; EP-A-537686; EP-A- 669340; H.H. Brintzinger et al.; Angew. Chem., 107 (1995), 1255; H.H. Brintzinger et al., J. Organomet. Chem. 232 (1982), 233). Dazu können zum Beispiel Cyclopentadienyl-Metall-Verbindungen mit Halogeniden von Übergangsmetallen wie Titan, Zirkonium und Hafnium umgesetzt werden. Die gebildeten Metallocendihalogenide, in der Regel die Metallocendichloride, sind im Falle der technisch interessanten racemischen Ansa-Bis-indenyl-Metallocene, die für die Herstellung von isotaktischem Polypropylen benötigt werden (EP 0485823, EP 0549900, EP 0576970, WO 98/40331), in der Regel schwer lösliche Verbindungen.

Sowohl bei der Darstellung des polymerisationsaktiven kationischen Metallocenkatalysatorsystems in ungeträgerter oder geträgerter Form, als auch für die Aufreinigung des racemischen Metallocenes, also der Katalysatorvorstufe, durch Kristallisationstechniken, wäre eine bessere Löslichkeit der technisch interessanten Metallocene wünschenswert.

Es bestand somit die Aufgabe, gut lösliche Metallocene zu finden, die nach Umwandlung in die polymerisationsaktive Spezie, mindestens die gleiche Polymerisationsperformance zeigen wie die Katalysatorsysteme, die aus den schwer löslichen Metallocendichloriden hergestellt werden.

Es wurde nun überraschenderweise gefunden, daß durch speziell substituierte Metallocene, nämlich Metallocenmonohalogenide, die der Erfindung zugrunde liegende Aufgabe gelöst wird.

Gegenstand der vorliegenden Erfindung sind Verbindungen der Formel (I),

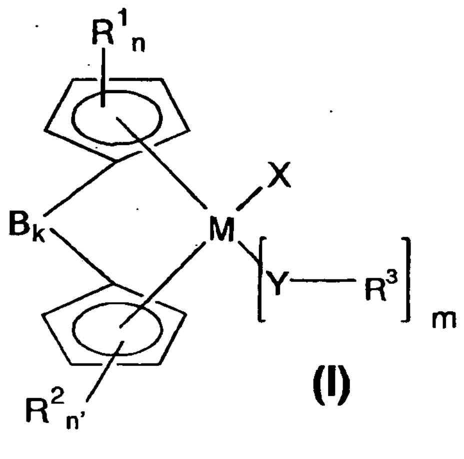

**(I)**

worin

M Ti, Zr oder Hf, besonders bevorzugt Zirkonium,

$R^1$ gleich oder verschieden sind und $Si(R^{12})_3$ ist, worin $R^{12}$ gleich oder verschieden ein Wasserstoffatom oder eine $C_1$-$C_{40}$-kohlenstoffhaltige Gruppe, bevorzugt $C_1$-$C_{20}$-Alkyl, $C_1$-$C_{10}$-Fluoralkyl, $C_1$-$C_{10}$-Alkoxy, $C_6$-$C_{20}$-Aryl, $C_6$-$C_{10}$-Fluoraryl, $C_6$-$C_{10}$-Aryloxy, $C_2$-$C_{10}$-Alkenyl, $C_7$-$C_{40}$-Arylalkyl, $C_7$-$C_{40}$-Alkylaryl oder $C_8$-$C_{40}$-Arylalkenyl, oder $R^1$ eine $C_1$-$C_{30}$ - kohlenstoffhaltige Gruppe, bevorzugt $C_1$-$C_{25}$-Alkyl, wie Methyl, Ethyl, tert.-Butyl, Cyclohexyl oder Octyl, $C_2$-$C_{25}$-Alkenyl, $C_3$-$C_{15}$-Alkylalkenyl, $C_6$-$C_{24}$-Aryl, $C_5$-$C_{24}$-Heteroaryl, $C_7$-$C_{30}$-Arylalkyl, $C_7$-$C_{30}$-Alkylaryl, fluorhaltiges $C_1$-$C_{25}$-Alkyl, fluorhaltiges $C_6$-$C_{24}$-Aryl, fluorhaltiges $C_7$-$C_{30}$-Arylalkyl, fluorhaltiges $C_7$-$C_{30}$-Alkylaryl oder $C_1$-$C_{12}$-Alkoxy ist,
oder zwei oder mehrere Reste $R^1$ können so miteinander verbunden sein, daß die Reste $R^1$ und die sie verbindenden Atome des Cyclopentadienylringes ein $C_4$-$C_{24}$-Ringsystem bilden, welches seinerseits substituiert sein kann,

$R^2$ gleich oder verschieden sind und $Si(R^{12})_3$ ist, worin $R^{12}$ gleich oder verschieden ein Wasserstoffatom oder eine

$C_1$-$C_{40}$-kohlenstoffhaltige Gruppe, bevorzugt $C_1$-$C_{20}$-Alkyl, $C_1$-$C_{10}$-Fluoralkyl, $C_1$-$C_{10}$-Alkoxy, $C_6$-$C_{14}$-Aryl, $C_6$-$C_{10}$-Fluoraryl, $C_6$-$C_{10}$-Aryloxy, $C_2$-$C_{10}$-Alkenyl, $C_7$-$C_{40}$-Arylalkyl, $C_7$-$C_{40}$-Alkylaryl oder $C_8$-$C_{40}$-Arylalkenyl, oder $R^2$ eine $C_1$-$C_{30}$ - kohlenstoffhaltige Gruppe, bevorzugt $C_1$-$C_{25}$-Alkyl, wie Methyl, Ethyl, tert.-Butyl, Cyclohexyl oder Octyl, $C_2$-$C_{25}$-Alkenyl, $C_3$-$C_{15}$-Alkylalkenyl, $C_6$-$C_{24}$-Aryl, $C_5$-$C_{24}$-Heteroaryl, $C_7$-$C_{30}$-Arylalkyl, $C_7$-$C_{30}$-Alkylaryl, fluorhaltiges $C_1$-$C_{25}$-Alkyl, fluorhaltiges $C_6$-$C_{24}$-Aryl, fluorhaltiges $C_7$-$C_{30}$-Arylalkyl, fluorhaltiges $C_7$-$C_{30}$-Alkylaryl oder $C_1$-$C_{12}$-Alkoxy ist,
oder zwei oder mehrere Reste $R^2$ können so miteinander verbunden sein, daß die Reste $R^2$ und die sie verbindenden Atome des Cyclopentadienylringes ein $C_4$-$C_{24}$-Ringsystem bilden, welches seinerseits substituiert sein kann,

$R^3$ gleich $C_7$-$C_{30}$-Alkylaryl, fluorhaltiges $C_6$-$C_{24}$-Aryl, oder fluorhaltiges $C_7$-$C_{30}$-Alkylaryl ist,

X ein Halogenatom, insbesondere Chlor, ist,

Y Sauerstoff ist,

n gleich 0 bis 4 ist,

n' gleich 0 bis 4 ist,

m gleich 1 ist,

k gleich 1 ist, und

B ein verbrückendes Strukturelement zwischen den beiden Cyclopentadienylringen bezeichnet und einer oder beide Cyclopentadienylringe so substituiert sind, daß sie einen Indenylring darstellen.

Beispiele für B sind Gruppen $M^3R^{13}R^{14}$, worin $M^3$ Kohlenstoff, Silizium, Germanium oder Zinn ist und $R^{13}$ und $R^{14}$ gleich oder verschieden eine $C_1$-$C_{20}$-kohlenwasserstoffhaltige Gruppe wie $C_1$-$C_{10}$-Alkyl, $C_6$-$C_{14}$-Aryl oder Trimethylsilyl bedeuten. Bevorzugt ist B gleich $CH_2$, $CH_2CH_2$, $CH(CH_3)CH_2$, $CH(C_4H_9)C(CH_3)_2$, $C(CH_3)_2$, $(CH_3)_2Si$, $(CH_3)_2Ge$, $(CH_3)_2Sn$, $(C_6H_5)_2Si$, $(C_6H_5)(CH_3)Si$, $Si(CH_3)(SiR^{20}R^{21}R^{22})$, $(C_6H_5)_2Ge$, $(C_6H_5)_2Sn$, $(CH_2)_4Si$, $CH_2Si(CH_3)_2$, O-$C_6H_4$ oder 2,2'-$(C_6H_4)_2$. Wobei $R^{20}R^{21}R^{22}$ gleich oder verschieden eine $C_1$-$C_{20}$-kohlenwasserstoff-haltige Gruppe wie $C_1$-$C_{10}$-Alkyl oder $C_6$-$C_{14}$-Aryl bedeuten. B kann auch mit einem oder mehreren Resten $R^1$ und/oder $R^2$ ein mono- oder polycyclisches Ringsystem bilden. Der Indenylring ist bevorzugt substituiert, insbesondere in 2-, 4-, 2,4,5-, 2,4,6-, 2,4,7 oder 2,4,5,6-Stellung, mit $C_1$-$C_{20}$-kohlenstoffhaltigen Gruppen, wie $C_1$-$C_{18}$-Alkyl oder $C_6$-$C_{18}$-Aryl, wobei auch zwei oder mehrere Substituenten des Indenylrings zusammen ein Ringsystem bilden können.

Besonders bevorzugt sind verbrückte Metallocenverbindungen der Formel (II),

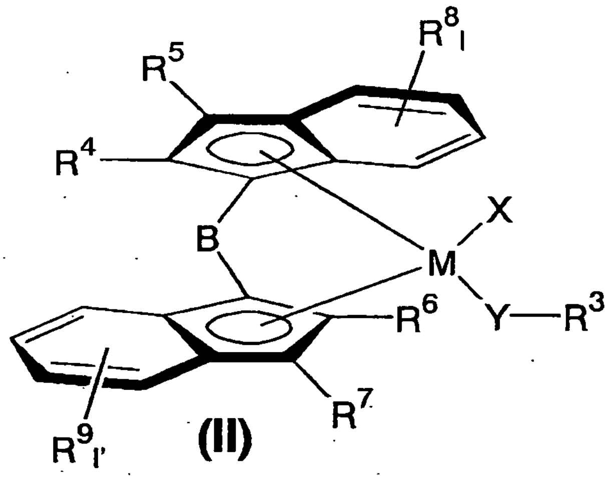

(II)

worin

M gleich Ti, Zr oder Hf ist, besonders bevorzugt Zirkonium,

$R^3$ gleich $C_7$-$C_{30}$-Alkylaryl, fluorhaltiges $C_6$-$C_{24}$-Aryl, oder fluorhaltiges $C_7$-$C_{30}$-Alkylaryl ist,

$R^4$, $R^6$ gleich oder verschieden sind und ein Wasserstoffatom, eine $C_1$-$C_{20}$ - kohlenstoffhaltige Gruppe, bevorzugt $C_1$-$C_{18}$-Alkyl, wie Methyl, Ethyl, n-Butyl, Cyclohexyl oder Octyl, $C_2$-$C_{10}$-Alkenyl, $C_3$-$C_{15}$-Alkylalkenyl, $C_6$-$C_{18}$-Aryl, $C_5$-$C_{18}$-Heteroaryl wie Pyridyl, Furyl oder Chinolyl, $C_7$-$C_{20}$-Arylalkyl, $C_7$-$C_{20}$-Alkylaryl, fluorhaltiges $C_1$-$C_{12}$-Alkyl, fluorhaltiges $C_6$-$C_{18}$-Aryl, fluorhaltiges $C_7$-$C_{20}$-Arylalkyl oder fluorhaltiges $C_7$-$C_{20}$-Alkylaryl ist,

$R^5$, $R^7$ gleich oder verschieden sind und ein Wasserstoffatom, eine $C_1$-$C_{20}$ - kohlenstoffhaltige Gruppe, bevorzugt $C_1$-$C_{18}$-Alkyl, wie Methyl, Ethyl, n-Butyl, Cyclohexyl oder Octyl, $C_2$-$C_{10}$-Alkenyl, $C_3$-$C_{15}$-Alkylalkenyl, $C_6$-$C_{18}$-Aryl, $C_5$-$C_{18}$-Heteroaryl wie Pyridyl, Furyl oder Chinolyl, $C_7$-$C_{20}$-Arylalkyl, $C_7$-$C_{20}$-Alkylaryl, fluorhaltiges $C_1$-$C_{12}$-Alkyl, fluorhaltiges $C_6$-$C_{18}$-Aryl, fluorhaltiges $C_7$-$C_{20}$-Arylalkyl oder fluorhaltiges $C_{7-}C_{20}$-Alkylaryl ist,

$R^8$ und $R^9$ gleich oder verschieden sind und ein Wasserstoffatom, Halogenatom oder eine $C_1$-$C_{20}$ - kohlenstoffhaltige Gruppe bedeuteten, bevorzugt eine lineare oder verzweigte $C_1$-$C_{18}$-Alkylgruppe, wie Methyl, Ethyl, tert.-Butyl, Cyclohexyl oder Octyl, $C_2$-$C_{10}$-Alkenyl, $C_3$-$C_{15}$-Alkylalkenyl, eine $C_6$-$C_{18}$-Arylgruppe, die gegebenenfalls substituiert sein kann, insbesondere Phenyl, Tolyl, Xylyl, tert.-Butylphenyl, Ethylphenyl, Di-tert.-butylphenyl, Naphthyl, Acenaphthyl, Phenanthrenyl oder Anthracenyl, $C_5$-$C_{18}$-Heteroaryl wie Pyridyl, Furyl oder Chinolyl, $C_7$-$C_{20}$-Arylalkyl, $C_7$-$C_{20}$-Alkylaryl, fluorhaltiges $C_1$-$C_{12}$-Alkyl, fluorhaltiges $C_6$-$C_{18}$-Aryl, fluorhaltiges $C_7$-$C_{20}$-Arylalkyl oder fluorhaltiges $C_{7-}C_{20}$-Alkylaryl sind, und zwei Reste $R^8$ oder $R^9$ ein mono- oder polycyclisches Ringssystem bilden können, das seinerseits gegebenenfalls substituiert sein kann,

X ein Halogenatom, insbesondere Chlor, ist,

Y Sauerstoff ist,

l, l' gleich oder verschieden eine ganze Zahl zwischen Null und 4, bevorzugt 1 oder 2, besonders bevorzugt gleich 1 sind,

B ein verbrückendes Strukturelement zwischen den beiden Idenylresten bezeichnet.

Beispiele für B sind Gruppen $M^3R^{13}R^{14}$, worin $M^3$ Kohlenstoff, Silizium, Germanium oder Zinn ist, bevorzugt Kohlenstoff und Silizium, und $R^{13}$ und $R^{14}$ gleich oder verschieden Wasserstoff, eine $C_1$-$C_{20}$-kohlenwasserstoffhaltige Gruppe wie $C_1$-$C_{10}$-Alkyl, $C_6$-$C_{14}$-Aryl oder Trimethylsilyl bedeuten. Bevorzugt ist B gleich $CH_2$, $CH_2CH_2$, $CH(CH_3)CH_2$, $CH(C_4H_9)C(CH_3)_2$, $C(CH_3)_2$, $(CH_3)_2Si$ $(CH_3)_2Ge$, $(CH_3)_2Sn$, $(C_6H_5)_2C$, $(C_6H_5)_2Si$, $(C_6H_5)(CH_3)Si$, $Si(CH_3)(SiR^{20}R^{21}R^{22})$, $(C_6H_5)_2Ge$, $(C_6H_5)_2Sn$, $(CH_2)_4Si$, $CH_2Si(CH_3)_2$, o-$C_6H_4$ oder 2,2'-$(C_6H_4)_2$. Wobei $R^{20}R^{21}R^{22}$ gleich oder verschieden eine $C_1$-$C_{20}$-kohlenwasserstoffhaltige Gruppe wie $C_1$-$C_{10}$-Alkyl oder $C_6$-$C_{14}$-Aryl bedeuten.

Ganz besonders bevorzugt sind verbrückte Metallocenverbindungen der Formel (II), worin

M gleich Zirkonium ist,

$R^3$ $C_7$-$C_{30}$-Alkylaryl, fluorhaltiges $C_6$-$C_{24}$-Aryl, oder fluorhaltiges $C_7$-$C_{30}$-Alkylaryl ist,

$R^4$, $R^6$ gleich oder verschieden sind und ein Wasserstoffatom oder eine $C_1$-$C_{12}$-Alkylgruppe, bevorzugt eine Alkylgruppe wie Methyl, Ethyl, n-Propyl, iso-Propyl, n-Butyl, n-Pentyl, n-Hexyl oder Octyl sind, besonders bevorzugt Methyl oder Ethyl ist,

$R^5$, $R^7$ gleich Wasserstoffatome sind,

$R^8$ und $R^9$ gleich oder verschieden sind und ein Wasserstoffatom, Halogenatom oder eine $C_1$-$C_{20}$ - kohlenstoffhaltige Gruppe bedeuten, bevorzugt eine lineare oder verzweigte $C_1$-$C_8$-Alkylgruppe, wie Methyl, Ethyl, tert.-Butyl, Cyclohexyl oder Octyl, $C_2$-$C_6$-Alkenyl, $C_3$-$C_6$-Alkylalkenyl, eine $C_6$-$C_{18}$-Arylgruppe, die gegebenenfalls substituiert sein kann, insbesondere Phenyl, Tolyl, Xylyl, tert.-Butylphenyl, Ethylphenyl, Di-tert.-butylphenyl, Naphthyl, Acenaphthyl, Phenanthrenyl oder Anthracenyl, $C_5$-$C_{18}$-Heteroaryl wie Pyridyl, Furyl oder Chinolyl, $C_7$-$C_{12}$-Arylalkyl, $C_7$-$C_{12}$-Alkylaryl, fluorhaltiges $C_1$-$C_8$-Alkyl, fluorhaltiges $C_6$-$C_{18}$-Aryl, fluorhaltiges $C_7$-$C_{12}$-Arylalkyl oder fluorhaltiges $C_7$-$C_{12}$-Alkylaryl ist,

X Chlor ist,

Y Sauerstoff ist,

l, l' gleich oder verschieden eine ganze Zahl zwischen Null und 4, bevorzugt 1 oder 2, besonders bevorzugt gleich 1 ist,

B ein verbrückendes Strukturelement zwischen den beiden Indenylresten bezeichnet, wobei bevorzugt B gleich $(CH_3)_2Si$, $(CH_3)_2Ge$, $(C_6H_5)_2Si$, $(C_6H_5)(CH_3)Si$, $CH_2CH_2$, $CH(CH_3)CH_2$, $CH(C_4H_9)C(CH_3)_2$, $CH_2$, $C(CH_3)_2$, $(C_6H_5)_2C$ ist, besonders bevorzugt $(CH_3)_2Si$, $CH_2$ und $CH_2CH_2$ ist.

Die erfindungsgemäßen Metallocene der Formeln I und II zeichnen sich dadurch aus, daß sie im Vergleich zu den entsprechenden Metallocen-Dichloriden (X=Cl und Y-$R^3$ = Cl) eine deutlich bessere Löslichkeit in inerten organischen Lösungsmitteln zeigen. Eine deutliche besser Löslichkeit soll bedeutet, daß sich die molaren Konzentrationen im organischen Lösungsmittel mindestens verdoppeln, bevorzugt mehr als vervierfachen und ganz besonders bevorzugt mehr als verachtfachen. Ein weiterer Vorteil ist darin zu sehen, daß die erfindungsgemäßen Verbindungen ein besseres Kristallisationsverhalten aus inerten organischen Lösungsmittel zeigen, wodurch ihre Aufreinigung erleichtert wird.
Als inerte organische Lösungsmittel für Metallocene werden für gewöhnlich aliphatische oder aromatische Kohlenwasserstoffe, aber auch halogenhaltige, sauerstoffhaltige oder stickstoffhaltige Kohlenwasserstoffe eingesetzt. Nicht einschränkende Beispiele für die einzelnen Lösungsmittelklassen sind Heptan, Toluol, Dichlorbenzol, Methylenchlorid, Tetrahydrofuran oder Triethylamin.
Statt der reinen chiralen verbrückten Metallocenverbindungen der Formel (II) (pseudo-rac) können bei der Katalysatorherstellung auch Gemische aus den Metallocenen der Formel (II) und den entsprechenden pseudo-meso Metallocenen der Formel (IIa) zur Katalysatorherstellung eingesetzt werden.

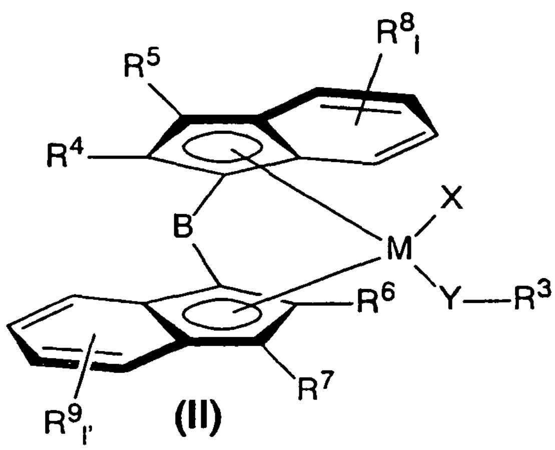

(II)

pseudo-rac

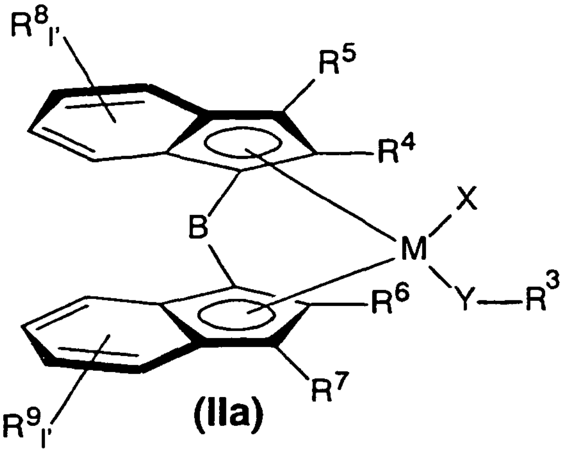

(IIa)

pseudo-meso

Erläuternde, jedoch nicht einschränkende Beispiele für die erfindungsgemäßen Metallocene sind:

Dimethylsilandiylbis(indenyl)-zirkonium-monochloro-mono-(2,4-di-tert.-butyl-phenolat)
Dimethylsilandiylbis(2-methyl-indenyl)-zirkonium-monochloromono-(2,4-di-tert.-butyl-phenolat)
Methylidenbis(2-methyl-indenyl)-zirkonium-monochloromono-(2,4-di-tert.-butyl-phenolat)
Isopropylidenbis(2-methyl-indenyl)-zirkonium-monochloromono-(2,4-di-tert.-butyl-phenolat)
Dimethylsilandiylbis(2-methyl-benzo-indenyl)-zirkonium-monochloro-mono-(2,4-di-tert.-butyl-phenolat)
Dimethylsilandiylbis(4-naphthyl-indenyl)-zirkonium-monochloromono-(2,4-di-tert.-butyl-phenolat)
Dimethylsilandiylbis(2-methyl-4-(1-naphthyl)-indenyl)-zirkonium-monochloro-mono-(2,4-di-tert.-butyl-phenolat)

Methylidenbis(2-methyl-4-(1-naphthyl)-indenyl)-zirkonium-monochloro-mono-(2,4-di-tert.-butyl-phenolat)
Isopropylidenbis(2-methyl-4-(1-naphthyl)-indenyl)-zirkonium-monochloro-mono-(2,4-di-tert.-butyl-phenolat)
Dimethylsilandiylbis(2-methyl-4-(2-naphthyl)-indenyl)-zirkonium-monochloro-mono-(2,4-di-tert.-butyl-phenolat)
Dimethylsilandiylbis(2-methyl-4-phenyl-indenyl)-zirkonium-monochloro-mono-(2,4-di-tert.-butyl-phenolat)
Methylidenbis(2-methyl-4-phenyl-indenyl)-zirkonium-monochloro-mono-(2,4-di-tert.-butyl-phenolat)
Isopropylidenbis(2-methyl-4-phenyl-indenyl)-zirkonium-monochloro-mono-(2,4-di-tert.-butyl-phenolat)
Dimethylsilandiylbis(2-methyl-4-t-butyl-indenyl)-zirkonium-monochloro-mono-(2,4-di-tert.-butyl-phenolat)
Dimethylsilandiylbis(2-methyl-4-isopropyl-indenyl)-zirkonium-monochloro-mono-(2,4-di-tert.-butyl-phenolat)
Dimethylsilandiylbis(2-methyl-4-ethyl-indenyl)-zirkonium-monochloro-mono-(2,4-di-tert.-butyl-phenolat)
Dimethylsilandiylbis(2,4-dimethyl-indenyl)-zirkonium-monochloro-mono-(2,4-di-tert.-butyl-phenolat)
Dimethylsilandiylbis(2-ethyl-indenyl)-zirkonium-monochloro-mono-(2,4-di-tert.-butyl-phenolat)
Dimethylsilandiylbis(2-ethyl-4-ethyl-indenyl)-zirkonium-monochloro-mono-(2,4-di-tert.-butyl-phenolat)
Dimethylsilandiylbis(2-ethyl-4-phenyl-indenyl)-zirkonium-monochloro-mono-(2,4-di-tert.-butyl-phenolat)
Dimethylsilandiybis(2-methyl-4,5-benzo-indenyl)-zirkonium-monochloro-mono-(2,4-di-tert.-butyl-phenolat)
Methylidenbis(2-methyl-4,5-benzo-indenyl)-zirkonium-monochloro-mono-(2,4-di-tert.-butyl-phenolat)
Isopropylidenbis(2-methyl-4,5-benzo-indenyl)-zirkonium-monochloro-mono-(2,4-di-tert.-butyl-phenolat)
Dimethylsilandiylbis(2-methyl-4,6 diisopropyl-indenyl)-zirkonium-monochloro-mono-(2,4-di-tert.-butyl-phenolat)
Dimethylsilandiylbis(2-methyl-4,5 diisopropyl-indenyl)-zirkonium-monochloro-mono-(2,4-di-tert.-butyl-phenolat)
Dimethylsilandiylbis(2,4,6-trimethyl-indenyl)-zirkonium-monochloro-mono-(2,4-di-tert.-butyl-phenolat)
Dimethylsilandiylbis(2,5,6-trimethyl-indenyl)-zirkonium-monochloro-mono-(2,4-di-tert.-butyl-phenolat)
Dimethylsilandiylbis(2,4,7-trimethyl-indenyl)-zirkonium-monochloro-mono-(2,4-di-tert.-butyl-phenolat)
Dimethylsilandiylbis(2-methyl-5-isobutyl-indenyl)-zirkonium-monochloro-mono-(2,4-di-tert.-butyl-phenolat)
Dimethylsilandiylbis(2-methyl-5-t-butyl-indenyl)-zirkonium-monochloro-mono-(2,4-di-tert.-butyl-phenolat)
Methyl(phenyl)silandiylbis(2-methyl-4-phenyl-indenyl)-zirkonium-monochloro-mono-(2,4-di-tert.-butyl-phenolat)
Methyl(phenyl)silandiylbis(2-methyl-4,6 diisopropyl-indenyl)-zirkonium-monochloro-mono-(2,4-di-tert.-butyl-phenolat)
Methyl(phenyl)silandiylbis(2-methyl-4-isopropyl-indenyl)-zirkonium-monochloro-mono-(2,4-di-tert.-butyl-phenolat)
Methyl(phenyl)silandiylbis(2-methyl-4,5-benzo-indenyl)-zirkonium-monochloro-mono-(2,4-di-tert.-butyl-phenolat)
Methyl(phenyl)silandiylbis(2-methyl-4,5-(methylbenzo)-indenyl)-zirkonium-monochloro-mono-(2,4-di-tert.-butyl-phenolat)
Methyl(phenyl)silandiylbis(2-methyl-4,5-(tetramethylbenzo)-indenyl)-zirkonium-monochloro-mono-(2,4-di-tert.-butyl-phenolat)
Methyl(phenyl)silandiylbis(2-methyl-indenyl)-zirkonium-monochloro-mono-(2,4-di-tert.-butyl-phenolat)
Methyl(phenyl)silandiylbis(2-methyl-5-isobutyl-indenyl)-zirkonium-monochloro-mono-(2,4-di-tert.-butyl-phenolat)
1,2-Ethandiylbis(2-methyl-4-phenyl-indenyl)-zirkonium-monochloro-mono-(2,4-di-tert.-butyl-phenolat)
1,4-Butandiylbis(2-methyl-4-phenyl-indenyl)-zirkonium-monochloro-mono-(2,4-di-tert.-butyl-phenolat)
1,2-Ethandiylbis(2-methyl-4,6 diisopropyl-indenyl)-zirkonium-monochloro-mono-(2,4-di-tert.-butyl-phenolat)
1,4-Butandiylbis(2-methyl-4-isopropyl-indenyl)-zirkonium-monochloro-mono-(2,4-di-tert.-butyl-phenolat)
1,4-Butandiylbis(2-methyl-4,5-benzo-indenyl)-zirkonium-monochloro-mono-(2,4-di-tert.-butyl-phenolat)
1,2-Ethandiylbis(2-methyl-4,5-benzo-indenyl)-zirkonium-monochloro-mono-(2,4-di-tert.-butyl-phenolat)
1,2-Ethandiylbis(2,4,7-trimethyl-indenyl)-zirkonium-monochloro-mono-(2,4-di-tert.-butyl-phenolat)
1,2-Ethandiylbis(2-methyl-indenyl)-zirkonium-monochloro-mono-(2,4-di-tert.-butyl-phenolat)
1,4-Butandiylbis(2-methyl-indenyl)-zirkonium-monochloro-mono-(2,4-di-tert.-butyl-phenolat)
Isopropyliden-bisindenyl-zirkonium-monochloro-mono-(2,4-di-tert.-butyl-phenolat)
Isopropyliden-cyclopentadienyl-9-fluorenyl-zirkonium-monochloro-mono-(2,4-di-tert.-butyl-phenolat)
Isopropyliden-cyclopentadienyl-indenyl-zirkonium-monochloro-mono-(2,4-di-tert.-butyl-phenolat)
Diphenylmethyliden-(cyclopentadienyl)-(9-fluorenyl)-zirkonium-monochloro-mono-(2,4-di-tert.-butyl-phenolat)
Diphenylmethyliden-(3-methyl-cyclopentadienyl)-(9-fluorenyl)-zirkonium-monochloro-mono-(2,4-di-tert.-butyl-phenolat)
Diphenylmethyliden-(3-isopropyl-cyclopentadienyl)-(9-fluorenyl)-zirkonium-monochloro-mono-(2,4-di-tert.-butyl-phenolat)
Diphenylmethyliden-(3-tert.-butyl-cyclopentadienyl)-(9-fluorenyl)-zirkonium-monochloro-mono-(2,4-di-tert.-butyl-phenolat)
Dimethylsilandiyl-cyclopentadienyl-9-fluorenyl-zirkonium-monochloro-mono-(2,4-di-tert.-butyl-phenolat)
Diphenylsilandiyl-cyclopentadienyl-9-fluorenyl-zirkonium-monochloro-mono-(2,4-di-tert.-butyl-phenolat)
Dimethylsilandiylbis(2-methyl-4-(tert-butyl-phenyl-indenyl)-zirkonium-monochloro-mono-(2,4-di-tert.-butyl-phenolat)
Dimethylsilandiylbis(2-methyl-4-(4-methyl-phenyl-indenyl)-zirkonium-monochloro-mono-(2,4-di-tert.-butyl-phenolat)
Dimethylsilandiylbis(2-methyl-4-(4-ethyl-phenyl-indenyl)-zirkonium-monochloro-mono-(2,4-di-tert.-butyl-phenolat)
Dimethylsilandiylbis(2-methyl-4-(4-trifluormethyl-phenyl-indenyl)-zirkonium-monochloro-mono-(2,4-di-tert.-butyl-phenolat)
Dimethylsilandiylbis(2-methyl-4-(4-methoxy-phenyl-indenyl)-zirkonium-monochloro-mono-(2,4-di-tert.-butyl-phenolat)
Dimethylsilandiylbis(2-ethyl-4-(4-tert-butyl-phenyl-indenyl)-zirkonium-monochloro-mono-(2,4-di-tert.-butyl-phenolat)
Dimethylsilandiylbis(2-ethyl-4-(4-ethyl-phenyl-indenyl)-zirkonium-monochloro-mono-(2,4-di-tert.-butyl-phenolat)
Dimethylsilandiylbis(2-ethyl-4-(4-trifluormethyl-phenyl-indenyl)-zirkonium-monochloro-mono-(2,4-di-tert.-butyl-phenolat)
Dimethylsilandiylbis(2-ethyl-4-(4-methoxy-phenyl-indenyl)-zirkonium-monochloro-mono-(2,4-di-tert.-butyl-phenolat)
Dimethylsilandiylbis(2-methyl-4-(4'-tert.-butyl-phenyl)-indenyl)-zirkonium-monochloro-mono-(2,4-di-tert.-butyl-phenolat)
Dimethylsilandiylbis(2-methyl-4-(3',5'-di-tert.-butyl-phenyl)-indenyl)-zirkonium-monochloro-mono-(2,4-di-tert.-butyl-phenolat)
Methylidenbis(2-methyl-4-(4'-tert.-butyl-phenyl)-indenyl)-zirkonium-monochloro-mono-(2,4-di-tert.-butyl-phenolat)
Isopropylidenbis(2-methyl-4-(4'-tert.-butyl-phenyl)-indenyl)-zirkonium-monochloro-mono-(2,4-di-tert.-butyl-phenolat)
Dimethylsilandiylbis(2-methyl-4-(4'-methyl-phenyl)-indenyl)-zirkonium-monochloro-mono-(2,4-di-tert.-butyl-phenolat)
Dimethylsilandiylbis(2-methyl-4-(4'-ethyl-phenyl)-indenyl)-zirkonium-monochloro-mono-(2,4-di-tert.-butyl-phenolat)
Dimethylsilandiylbis(2-methyl-4-(4'-n-propyl-phenyl)-indenyl)-zirkonium-monochloro-mono-(2,4-di-tert.-butyl-phenolat)
Dimethylsilandiylbis(2-methyl-4-(4'-iso-propyl-phenyl)-indenyl)-zirkonium-monochloro-mono-(2,4-di-tert.-butyl-phenolat)
Dimethylsilandiylbis(2-methyl-4-(4'-n-butyl-phenyl)-indenyl)-zirkonium-monochloro-mono-(2,4-di-tert.-butyl-phenolat)
Dimethylsilandiylbis(2-methyl-4-(4'-hexyl-phenyl)-indenyl)-zirkonium-monochloro-mono-(2,4-di-tert.-butyl-phenolat)
Dimethylsilandiylbis(2-methyl-4-(4'-sec-butyl-phenyl)-indenyl)-zirkonium-monochloro-mono-(2,4-di-tert.-butyl-phenolat)
Dimethylsilandiylbis(2-ethyl-4-phenyl)-indenyl)-zirkonium-monochloro-mono-(2,4-di-tert.-butyl-phenolat)
Dimethylsilandiylbis(2-ethyl-4-(4'-methyl-phenyl)-indenyl)-zirkonium-monochloro-mono-(2,4-di-tert.-butyl-phenolat)
Dimethylsilandiylbis(2-ethyl-4-(4'-ethyl-phenyl)-indenyl)-zirkonium-monochloro-mono-(2,4-di-tert.-butyl-phenolat)
Dimethylsilandiylbis(2-ethyl-4-(4'-n-propyl-phenyl)-indenyl)-zirkonium-monochloro-mono-(2,4-di-tert.-butyl-phenolat)
Dimethylsilandiylbis(2-ethyl-4-(4'-iso-propyl-phenyl)-indenyl)-zirkonium-monochloro-mono-(2,4-di-tert.-butyl-phenolat)
Dimethylsilandiylbis(2-ethyl-4-(4'-n-butyl-phenyl)-indenyl)-zirkonium-monochloro-mono-(2,4-di-tert.-butyl-phenolat)
Dimethylsilandiylbis(2-ethyl-4-(4'-hexyl-phenyl)-indenyl)-zirkonium-monochloro-mono-(2,4-di-tert.-butyl-phenolat)
Dimethylsilandiylbis(2-ethyl-4-(4'-pentyl-phenyl)-indenyl)-zirkonium-monochloro-mono-(2,4-di-tert.-butyl-phenolat)
Dimethylsilandiylbis(2-ethyl-4-(4'-cyclohexyl-phenyl)-indenyl)-zirkonium-monochloro-mono-(2,4-di-tert.-butyl-phenolat)
Dimethylsilandiylbis(2-ethyl-4-(4'-sec-butyl-phenyl)-indenyl)-zirkonium-monochloro-mono-(2,4-di-tert.-butyl-phenolat)
Dimethylsilandiylbis(2-ethyl-4-(4'-tert.-butyl-phenyl)-indenyl)-zirkonium-monochloro-mono-(2,4-di-tert.-butyl-phenolat)
Dimethylsilandiylbis(2-ethyl-4-(3',5'-di-tert.-butyl-phenyl)-indenyl)-zirkonium-monochloro-mono-(2,4-di-tert.-butyl-phenolat)
Methylidenbis(2-ethyl-4-(4'-tert.=butyl-phenyl)-indenyl)-zirkonium-monochloro-mono-(2,4-di-tert.-butyl-phenolat)
Isopropylidenbis(2-ethyl-4-(4'-tert.-butyl-phenyl)-indenyl)-zirkonium-monochloro-mono-(2,4-di-tert.-butyl-phenolat)
Dimethylsilandiylbis(2-n-propyl-4-phenyl)-indenyl)-zirkonium-monochloro-mono-(2,4-di-tert.-butyl-phenolat)
Dimethylsilandiylbis(2-n-propyl-4-(4'-methyl-phenyl)-indenyl)-zirkonium-monochloro-mono-(2,4-di-tert.-butyl-phenolat)
Dimethylsilandiylbis(2-n-propyl-4-(4'-ethyl-phenyl)-indenyl)-zirkonium-monochloro-mono- (2,4-di-tert.-butyl-phenolat)
Dimethylsilandiylbis(2-n-propyl-4-(4'-n-propyl-phenyl)-indenyl)-zirkonium-monochloro-mono-(2,4-di-tert.-butyl-phenolat)
Dimethylsilandiylbis(2-n-propyl-4-(4'-iso-propyl-phenyl)-indenyl)-zirkonium-monochloro-mono-(2,4-di-tert.-butyl-phenolat)
Dimethylsilandiylbis(2-n-propyl-4-(4'-n-butyl-phenyl)-indenyl)-zirkonium-monochloro-mono-(2,4-di-tert.-butyl-phenolat)
Dimethylsilandiylbis(2-n-propyl-4-(4'-hexyl-phenyl)-indenyl)-zirkonium-monochloro-mono-(2,4-di-tert.-butyl-phenolat)
Dimethylsilandiylbis(2-n-propyl-4-(4'-cyclohexyl-phenyl)-indenyl)-zirkonium-monochloro-mono-(2,4-di-tert.-butyl-phenolat)
Dimethylsilandiylbis(2-n-propyl-4-(4'-sec-butyl-phenyl)-indenyl)-zirkonium-monochloro-mono-(2,4-di-tert.-butyl-phenolat)
Dimethylsilandiylbis(2-n-propyl-4-(4'-tert.-butyl-phenyl)-indenyl)-zirkonium-monochloro-mono-(2,4-di-tert.-butyl-phenolat)
Dimethylsilandiylbis(2-n-propyl-4-(3',5'-di-tert.-butyl-phenyl)-indenyl)-zirkonium-monochloro-mono-(2,4-di-tert.-butyl-phenolat)
Methylidenbis(2-n-propyl-4-(4'-tert.-butyl-phenyl)-indenyl)-zirkonium-monochloro-mono-(2,4-di-tert.-butyl-phenolat)
Isopropylidenbis(2-n-propyl-4-(4'-tert.-butyl-phenyl)-indenyl)-zirkonium-monochloro-mono-(2,4-di-tert.-butyl-phenolat)
Dimethylsilandiylbis(2-n-butyl-4-phenyl)-indenyl)-zirkonium-monochloro-mono-(2,4-di-tert.-butyl-phenolat)
Dimethylsilandiylbis(2-n-butyl-4-(4'-methyl-phenyl)-indenyl)-zirkonium-monochloro-mono-(2,4-di-tert.-butyl-phenolat)
Dimethylsilandiylbis(2-n-butyl-4-(4'-ethyl-phenyl)-indenyl)-zirkonium-monochloro-mono-(2,4-di-tert.-butyl-phenolat)
Dimethylsilandiylbis(2-n-butyl-4-(4'-n-propyl-phenyl)-indenyl)-zirkonium-monochloro-mono-(2,4-di-tert.-butyl-phenolat)
Dimethylsilandiylbis(2-n-butyl-4-(4'-iso-propyl-phenyl)-indenyl)-zirkonium-monochloro-mono-(2,4-di-tert.-butyl-phenolat)
Dimethylsilandiylbis(2-n-butyl-4-(4'-n-butyl-phenyl)-indenyl)-zirkonium-monochloro-mono-(2,4-di-tert.-butyl-phenolat)
Dimethylsilandiylbis(2-n-butyl-4-(4'-hexyl-phenyl)-indenyl)-zirkonium-monochloro-mono-(2,4-di-tert.-butyl-phenolat)
Dimethylsilandiylbis(2-n-butyl-4-(4'-cyclohexyl-phenyl)-indenyl)-zirkonium-monochloro-mono-(2,4-di-tert.-butyl-phenolat)
Dimethylsilandiylbis(2-n-butyl-4-(4'-sec-butyl-phenyl)-indenyl)-zirkonium-monochloro-mono-(2,4-di-tert.-butyl-phenolat)
Dimethylsilandiylbis(2-n-butyl-4-(4'-tert.-butyl-phenyl)-indenyl)-zirkonium-monochloro-mono-(2,4-di-tert.-butyl-phenolat)
Dimethylsilandiylbis(2-hexyl-4-phenyl)-indenyl)zirkonium-monochloro-mono-(2,4-di-tert.-butyl-phenolat)
Dimethylsilandiylbis(2-hexyl-4-(4'-methyl-phenyl)-indenyl)-zirkonium-monochloro-mono-(2,4-di-tert.-butyl-phenolat)
Dimethylsilandiylbis(2-hexyl-4-(4'-ethyl-phenyl)-indenyl)-zirkonium-monochloro-mono-(2,4-di-tert.-butyl-phenolat)
Dimethylsilandiylbis(2-hexyl-4-(4'-n-propyl-phenyl)-indenyl)-zirkonium-monochloro-mono-(2,4-di-tert.-butyl-phenolat)
Dimethylsilandiylbis(2-hexyl-4-(4'-iso-propyl-phenyl)-indenyl)-zirkonium-monochloro-mono-(2,4-di-tert.-butyl-phenolat)
Dimethylsilandiylbis(2-hexyl-4-(4'-n-butyl-phenyl)-indenyl)-zirkonium-monochloro-mono-(2,4-di-tert.-butyl-phenolat)
Dimethylsilandiylbis(2-hexyl-4-(4'-hexyl-phenyl)-indenyl)-zirkonium-monochloro-mono-(2,4-di-tert.-butyl-phenolat)
Dimethylsilandiylbis(2-hexyl-4-(4'-cyclohexyl-phenyl)-indenyl)-zirkonium-monochloro-mono-(2,4-di-tert.-butyl-phenolat)
Dimethylsilandiylbis(2-hexyl-4-(4'-sec-butyl-phenyl)-indenyl)-zirkonium-monochloro-mono-(2,4-di-tert.-butyl-phenolat)
Dimethylsilandiylbis(2-hexyl-4-(4'-tert.-butyl-phenyl)-indenyl)-zirkonium-monochloro-mono-(2,4-di-tert.-butyl-phenolat)
Dimethylgermandiylbis(2-ethyl-4-(4'-tert.-butyl-phenyl)-indenyl)-zirkonium-monochloro-mono-(2,4-di-tert.-butyl-phenolat)
Dimethylgermandiylbis(2-methyl-4-(4'-tert.-butyl-phenyl)-indenyl)-zirkonium-monochloro-mono-(2,4-di-tert.-butyl-phenolat)
Ethylidenbis(2-ethyl-4-phenyl)-indenyl)-zirkonium-monochloromono-(2,4-di-tert.-butyl-phenolat)
Ethylidenbis(2-ethyl-4-(4'-tert.-butyl-phenyl)-indenyl)-zirkonium-monochloro-mono-(2,4-di-tert.-butyl-phenolat)
Ethylidenbis(2-n-propyl-4-(4'-tert.-butyl-phenyl)-indenyl)-zirkonium-monochloro-mono-(2,4-di-tert.-butyl-phenolat)
Ethylidenbis(2-methyl-4-(4'-tert.-butyl-phenyl)-indenyl)-zirkonium-monochloro-mono-(2,4-di-tert.-butyl-phenolat)
Methylethylidenbis(2-ethyl-4-(4'-tert.-butyl-phenyl)-indenyl)-zirkonium-monochloro-mono-(2,4-di-tert.-butyl-phenolat)
Dimethylsilandiyl(2-methylazapentalen)(2-methyl-indenyl)-zirkonium-monochloro-mono-(2,4-di-tert.-butyl-phenolat)
Dimethylsilandiyl(2-methylazapentalen)(2-methyl-4-phenyl-indenyl) -zirkonium-monochloro-mono-(2,4-di-tert.-butyl-phenolat)
Dimethylsilandiyl(2-methylazapentalen)(2-methyl-4,5-benzo-indenyl) -zirkonium-monochloro-mono-(2,4-di-tert.-butyl-phenolat)
Dimethylsilandiyl(2-methylazapentalen)(2-ethyl-4-(4'-tert-butylphenyl-indenyl)-zirkonium-monochloro-mono-(2,4-di-tert.-butyl-phenolat)
Dimethylsilandiyl(2-methylazapentalen)(2-methyl-4-(4'-tert.-butyl-phenyl)-indenyl)-zirkonium-monochloro-mono-(2,4-di-tert.-butyl-phenolat)
Dimethylsilandiyl(2-methylazapentalen)(2-n-propyl-4-(4'-tert.-butyl-phenyl)-indenyl)-zirkonium-monochloro-mono-(2,4-di-tert.-butyl-phenolat)
Dimethylsilandiyl(2-ethylazapentalen)(2-methyl-4-phenyl-indenyl) -zirkonium-monochloro-mono-(2,4-di-tert.-butyl-phenolat)
Dimethylsilandiyl(2-ethylazapentalen)(2-methyl-4-phenyl-indenyl)-zirkonium-monochloro-mono-(2,4-di-tert.-butyl-phenolat)Dimethylsilandiyl(2-ethylazapentalen)(2-methyl-4,5-benzo-indenyl) -zirkonium-monochloro-mono-(2,4-di-tert.-butyl-phenolat)
Dimethylsilandiyl(2-ethylazapentalen)(2-ethyl-4-(4'-tert-butylphenyl-indenyl)-zirkonium-monochloro-mono-(2,4-di-tert.-butyl-phenolat)
Dimethylsilandiyl(2-ethylazapentalen)(2-methyl-4-(4'-tert.-butylphenyl)-indenyl)-zirkonium-monochloro-mono-(2,4-di-tert.-butyl-phenolat)
Dimethylsilandiyl(2-ethylazapentalen)(2-n-propyl-4-(4'-tert.-butyl-phenyl)-indenyl)-zirkonium-monochloro-mono-(2,4-di-tert.-butyl-phenolat)
Dimethylsilandiyl(2-methylthiapentalen)(2-methyl-indenyl)-zirkonium-monochloro-mono-(2,4-di-tert.-butyl-phenolat)
Dimethylsilandiyl(2-methylthiapentalen)(2-methyl-4-phenyl-indenyl) -zirkonium-monochloro-mono-(2,4-di-tert.-butyl-phenolat)
Dimethylsilandiyl(2-methylthiapentalen)(2-methyl-4,5-benzo-indenyl) -zirkonium-monochloro-mono-(2,4-di-tert.-butyl-phenolat) Dimethylsilandiyl(2-methylthiapentalen)(2-ethyl-4-(4'-tert.-butyl-phenyl)-indenyl)-zirkonium-monochloro-mono-(2,4-di-tert.-butyl-phenolat)
Dimethylsilandiyl(2-methylthiapentalen)(2-n-propyl-4-(4'-tert.-butyl-phenyl)-indenyl)-zirkonium-monochloro-mono-(2,4-di-tert.-butyl-phenolat)
Dimethylsilandiyl(2-ethylthiapentalen)(2-methyl-indenyl)-zirkonium-monochloro-mono-(2,4-di-tert.-butyl-phenolat)
Dimethylsilandiyl(2-ethylthiapentalen)(2-methyl-4-phenyl-indenyl) -zirkonium-monochloro-mono-(2,4-di-tert.-butyl-phenolat)
Dimethylsilandiyl(2-ethylthiapentalen)(2-methyl-4,5-benzo-indenyl) -zirkonium-monochloro-mono-(2,4-di-tert.-butyl-phenolat)
Dimethylsilandiyl(2-ethylthiapentalen)(2-ethyl-4-(4'-tert.-butylphenyl)-indenyl)-zirkonium-monochloro-mono-(2,4-di-tert.-butyl-phenolat)
Dimethylsilandiyl(2-ethylthiapentalen)(2-n-propyl-4-(4'-tert.-butyl-phenyl)-indenyl)-zirkonium-monochloro-mono-(2,4-di-tert.-butyl-phenolat)
Des weiteren sind die Metallocene, bei denen das zirkoniumfragment "-zirkonium-monochloro-mono-(2,4-di-tert.-butyl-phenolat)" die Bedeutungen
Zirkonium-monochloro-mono-(2,6-di-tert.-butyl-phenolat)
Zirkonium-monochloro-mono-(3,5-di-tert.-butyl-phenolat)
Zirkonium-monochloro-mono-(2,6-di-sec.-butyl-phenolat)
Zirkonium-monochloro-mono-(2,4-di-methylphenolat)

Zirkonium-monochloro-mono-(2,3-di-methylphenolat)
Zirkonium-monochloro-mono-(2,5-di-methylphenolat)
Zirkonium-monochloro-mono-(2,6-di-methylphenolat)
Zirkonium-monochloro-mono-(3,4-di-methylphenolat)
Zirkonium-monochloro-mono-(3,5-di-methylphenolat)
Zirkonium-monochloro-mono-(2-methylphenolat)
Zirkonium-monochloro-mono-(3-methylphenolat)
Zirkonium-monochloro-mono-(4-methylphenolat)
Zirkonium-monochloro-mono-(2-ethylphenolat)
zirkonium-monochloro-mono-(3-ethylphenolat)
Zirkonium-monochloro-mono-(4-ethylphenolat)
zirkonium-monochloro-mono-(2-sec.-butylphenolat)
Zirkonium-monochloro-mono-(2-tert.-butylphenolat)
Zirkonium-monochloro-mono-(3-tert.-butylphenolat)
Zirkonium-monochloro-mono-(4-sec.-butylphenolat)
Zirkonium-monochloro-mono-(4-tert.-butylphenolat)
Zirkonium-monochloro-mono-(2-isopropyl-5-methylphenolat)
Zirkonium-monochloro-mono-(4-isopropyl-3-methylphenolat)
Zirkonium-monochloro-mono-(5-isopropyl-2-methylphenolat)
Zirkonium-monochloro-mono-(5-isopropyl-3-methylphenolat)
Zirkonium-monochloro-mono-(2,4-bis-(2-methyl-2-butyl)-phenolat)
Zirkonium-monochloro-mono-(2,6-di-tert.-butyl-4-methyl-phenolat)
Zirkonium-monochloro-mono-(4-nonylphenolat)
Zirkonium-monochloro-mono-(isopropylphenolat)
zirkonium-monochloro-mono-(propylphenolat)
Zirkonium-monochloro-mono-(trimethylphenolat)
Zirkonium-monochloro-mono-(tert.-butyl-methylphenolat)
Zirkonium-monochloro-mono-(2-tert.-butyl-4-ethylphenolat)
Zirkonium-monochloro-mono-(2,6-diisopropylphenolat)
Zirkonium-monochloro-mono-(4-octylphenolat)
zirkonium-monochloro-mono-(2,6-di-tert.-butyl-4-ethylphenolat)

In der Literatur ist die Synthese von Dicyclopentadienyl-zirkonium-(2,6-di-tert.-butyl-phenoxy)-mono-chlorid und Dicyclopentadienyl-zirkonium-(2,6-di-isopropyl-phenoxy)-mono-chlorid beschrieben (T. Repo et al., J. Organomet. Chem. 541 (1997), 363):

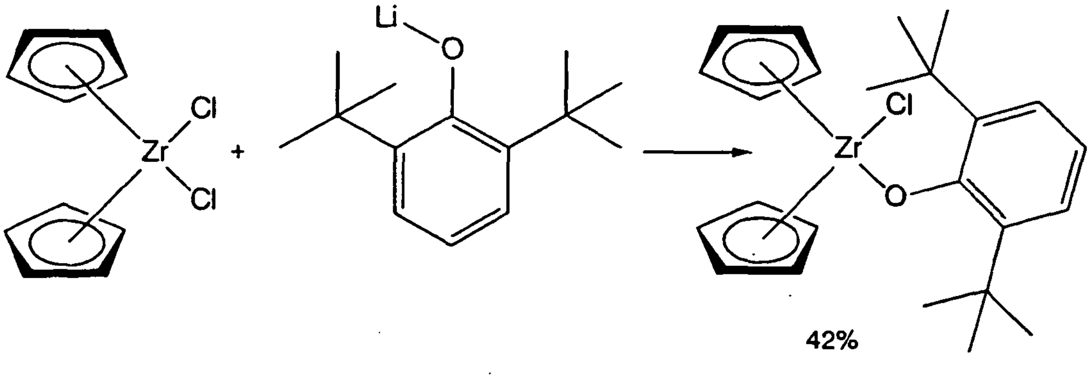


Bei dem beschriebenen Verfahren wird bei tiefen Temperaturen (-78°C) gearbeitet, was im technischen Maßstab aufwendig und kostenintensiv ist, und außerdem ist die isolierte Ausbeute nur befriedigend.

Überraschenderweise wurde nun gefunden, daß die Herstellung der Metallocene der Formeln (I) und (II) mit guten Ausbeuten durchgeführt werden kann, wobei Metallocenhalogenide mit Salzen der Formel $M^1$-Y-R3 in einen inerten Lösungsmittel oder Lösungsmittelgemisch im Temperaturbereich von 0°C bis 200°C, bevorzugt 60°C bis 110°C, umgesetzt werden:

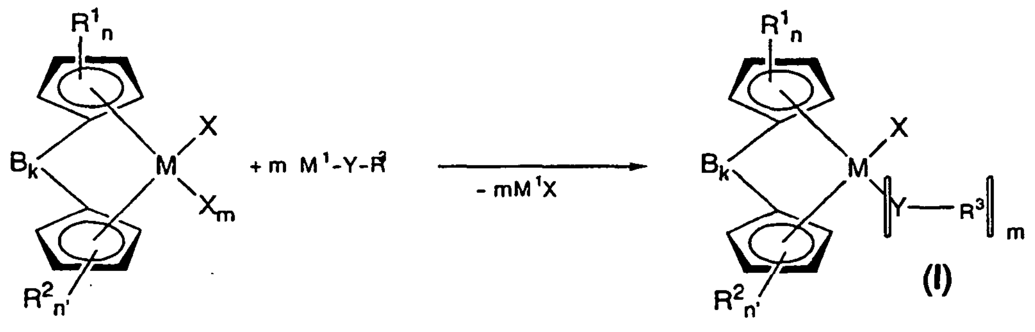


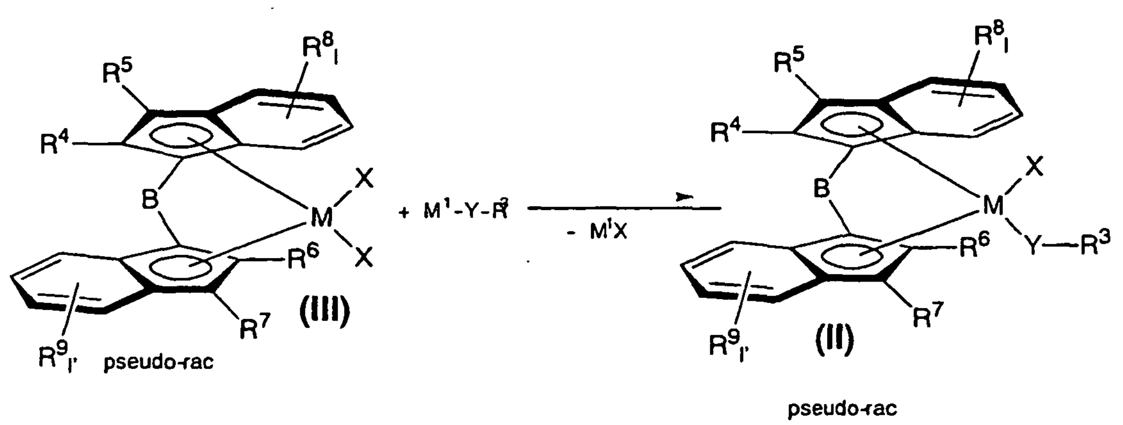


Dabei ist $M^1$ gleich einem Kation oder Kationfragment wie beispielsweise Li, Na, K, MgCl, MgBr, MgI und die übrigen Reste sind wie oben definiert.

Bevorzugt werden bei dem Verfahren als Metallocene Metallocendichlorid der Formel III eingesetzt, wie sie in folgenden Schriften genannt werden: (EP 0485823, EP 0549900, EP 0576970, WO 98/22486, WO 98/40331).

Die Verbindung $M^1$-Y-$R^3$ läßt sich durch Deprotonierung der Verbindung H-Y-$R^3$ mit einer geeigneten Base, wie zum Beispiel Butyllithium, Methyllithium, Natriumhydrid, Kaliumhydrid, Natrium, Kalium oder Grignardverbindungen in einem inerten Lösungsmittel oder Lösungsmittelgemisch herstellen.

Nichteinschränkende Beispiele für geeignete Lösungsmittel sind Kohlenwasserstoffe, die halogeniert sein können, wie Benzol, Toluol, Xylol, Mesitylen, Ethylbenzol, Chlorbenzol, Dichlorbenzol, Fluorbenzol, Dekalin, Tetralin, Pentan, Hexan, Cyclohexan, Ether wie Diethylether, Di-n-Butylether, MTBE, THF, DME, Anisol, Triglyme, Dioxan, Amide wie DMF, Dimethylacetamid, NMP, Sulfoxide wie DMSO, Phosphoramide wie Hexamethylphosphorsäuretriamid, Harnstoff-Derivate wie DMPU, Ketone wie Aceton, Ethylmethylketon, Ester wie Essigsäureethylester, Nitrile wie Acetonitril sowie beliebige Gemische aus jenen Stoffen. Bevorzugt werden Lösungsmittel oder Lösungsmittelgemische in denen ebenfalls direkt die anschließende Umsetzung mit dem Metallocendichlorid durchgeführt werden kann. Nichteinschränkende Beispiele hierfür sind Toluol, Hexan, Heptan, Xylol, Tetrahydrofuran (THF), Dimethoxyethan (DME), Toluol/THF, Heptah/DME oder Toluol/DME.

Bei den Verbindungen des Typs H-Y-$R^3$ handelt es sich um die Stoffklasse der Phenole, wobei der Rest $R^3$ wie oben beschrieben definiert ist.

Erläuternde, jedoch nicht einschränkende Beispiele für die einsetzbaren Verbindungen der Formel H-Y-$R^3$ sind:

2,4-Di-tert.-butyl-phenol; 2,6-Di-tert.-butyl-phenol; 3,5-Di-tert.-butyl-phenol; 2,6-Di-sec.-butyl-phenol; 2,4-Dimethylphenol; 2,3-Dimethylphenol; 2,5-Dimethylphenol; 2,6-Dimethylphenol; 3,4-Dimethylphenol; 3,5-Dimethylphenol; 2-Methylphenol; 3-Methylphenol; 4-Methylphenol; 2-Ethylphenol; 3-Ethylphenol; 4-Ethylphenol; 2-sec.-Butylphenol; 2-tert.-Butylphenol; 3-tert.-Butylphenol; 4-sec.-Butylphenol; 4-tert.-Butylphenol; 2-Isopropyl-5-methylphenol; 4-Isopropyl-3-methylphenol; 5-Isopropyl-2-methylphenol; 5-Isopropyl-3-methylphenol; 2,4-Bis-(2-methyl-2-butyl)-phenol; 2,6-Di-tert.-butyl-4-methylphenol; 4-Nonylphenol; 2-Isopropylphenol; 3-Isopropylphenol; 4-Isopropylphenol; 2-Propylphenol; 4-Propylphenol; 2,3,5-Trimethylphenol; 2,3,6-Trimethylphenol; 2,4,6-Trimethylphenol; 3,4,5-Trimethylphenol; 2-tert.-Butyl-4-methylphenol; 2-tert.-Butyl-5-methylphenol; 2-tert.-Butyl-6-methylphenol; 4-(2-Methyl-2-butyl)-phenol; 2-tert.-Butyl-4-ethylphenol; 2,6-Diisopropylphenol; 4-Octylphenol; 4-(1,1,3,3-Tetramethylbutyl)-phenol; 2,6-Di-tert.-butyl-4-ethylphenol; 4-sec.-Butyl-2,6-di-tert.-butylphenol; 4-Dodecylphenol; 2,4,6-Tri-tert.-butylphenol; 3-(Pentadecyl)-phenol; 2-Methyl-1-naphthol.

Das Verfahren wird im allgemeinen in einem Temperaturbereich von 0°C bis +200°C durchgeführt, bevorzugt in einem Temperaturbereich von 40°C bis 140°C, besonders bevorzugt bei einer Temperatur zwischen 60°C und 110°C.

Das molare Verhältnis von Reagenz $M^1$-Y-$R^3$ zum Metallocenhalogenid, insbesondere zum Metallocendichlorid (z. B. der Formel III) liegt im allgemeinen zwischen 5 : 1 bis 0.8 : 1 bevorzugt zwischen 2 : 1 bis 0.9 : 1.

Die Konzentration an Metallocendichlorid (z. B. der Formel III) bzw. an Reagenz $M^1$-Y-$R^3$ in der Reaktionsmischung liegt im allgemeinen im Bereich zwischen 0,001 mol/l und 8 mol/l, bevorzugt im Bereich zwischen 0,01 und 3 mol/l, besonders bevorzugt im Bereich zwischen 0,05 mol/l und 2 mol/l.

Die Dauer der Umsetzung von Metallocendichlorid (z. B. der Formel III) mit Reagenz $M^1$-Y-$R^3$ liegt im allgemeinen im Bereich zwischen 5 Minuten und 1 Woche, bevorzugt im Bereich zwischen 15 Minuten und 48 Stunden.

Darüber hinaus lassen sich insbesondere Monoaryloxymonochlorozirkonocene der Formel (II) auch gemäß dem in der deutschen Patentanmeldung 199 12576.7 vom 19.03.99 beschriebenen Verfahren herstellen, deren Offenbarung ebenfalls Gegenstand der vorliegenden Beschreibung ist.

Die erfindungsgemäßen Metallocene der Formeln I und II sind hochaktive Katalysatorkomponenten für die Olefinpolymerisation. Je nach Substitutionsmuster der Liganden können die Metallocene als Isomerengemisch anfallen. Die Metallocene werden für die Polymerisation bevorzugt isomerenrein eingesetzt.

Bevorzugt werden die pseudo-rac isomeren Metallocene der Formel II eingesetzt.

Die erfindungsgemäßen Metallocene der Formeln I und II eignen sich insbesondere als Bestandteil von Katalysatorsystemen zur Herstellung von Polyolefinen durch Polymerisation von mindestens einem Olefin in Gegenwart eines Katalysators, der mindestens einen Cokatalysator und mindestens ein Metallocen enthält. Unter dem Begriff Polymerisation wird eine Homopolymerisation wie auch eine Copolymerisation verstanden.

Die erfindungsgemäßen Metallocene der Formeln I und II, insbesondere der Formel II, können zur Polymerisation eines oder mehrerer Olefine der Formel $R^{\alpha}$-CH=CH-$R^{\beta}$ verwendet werden, worin $R^{\alpha}$ und $R^{\beta}$ gleich oder verschieden sind und ein Wasserstoffatom oder einen Kohlenwasserstoff mit 1 bis 20 C-Atomen, insbesondere 1 bis 10 C-Atomen, bedeuten, und $R^{\alpha}$ und $R^{\beta}$ zusammen mit den sie verbindenden Atomen einen oder mehrere Ringe bilden können. Beispiele für solche Olefine sind 1-Olefine mit 2 - 40, vorzugsweise 2 bis 10 C-Atomen, wie Ethen, Propen, 1-Buten, 1-Penten, 1-Hexen, 4-Methyl-1-penten oder 1-Octen, Styrol, Diene wie 1,3-Butadien, 1,4-Hexadien, Vinylnorbornen, Norbornadien, Ethylnorbornadien und cyclische Olefine wie Norbornen, Tetracyclododecen oder Methylnorbornen. Bevorzugt werden Ethylen oder Propylen homopolymerisiert, oder Ethylen mit einem oder mehreren cyclischen Olefinen, wie Norbornen , und/oder einem oder mehreren Dienen mit 4 bis 20 C-Atomen, wie 1,3-Butadien oder 1,4-Hexadien, copolymerisiert.

Beispiele solcher Copolymere sind Ethylen/Norbornen-Copolymere, Ethylen/Propylen-Copolymere und Ethylen/Propylen/1,4-Hexadien-Copolymere.

Die Polymerisation wird bei einer Temperatur von - 60 bis 300 °C , bevorzugt 50 bis 200 °C, ganz besonders bevorzugt 50 - 80 °C durchgeführt. Der Druck beträgt 0,5 bis 2000 bar, bevorzugt 5 bis 64 bar.

Die Polymerisation kann in Lösung, in Masse, in Suspension oder in der Gasphase, kontinuierlich oder diskontinuierlich, ein- oder mehrstufig durchgeführt werden. Eine bevorzugte Ausführungform ist die Gasphasen- und Massepolymerisation.

Bevorzugt enthält der eingesetzte Katalysator eine der erfindungsgemäßen Metallocenverbindungen. Es können auch Mischungen zweier oder mehrerer Metallocenverbindungen eingesetzt werden, z. B. zur Herstellung von Polyolefinen mit breiter oder multimodaler Molmassenverteilung.

Der Cokatalysator, der zusammen mit einem erfindungsgemäßen Metallocene der Formeln I und II das Katalysatorsystem bildet, enthält mindestens eine Verbindung vom Typ eines Aluminoxans oder einer Lewis-Säure oder einer ionischen Verbindung, die durch Reaktion mit einem Metallocen dieses in eine kationische Verbindung überführt.

Als Aluminoxan wird bevorzugt eine Verbindung der allgemeinen Formel (VII)

$$(R\ AlO)_n \qquad (VII)$$

verwendet.

Weitere geeignete Aluminoxane können z.B. cyclisch wie in Formel (VI)

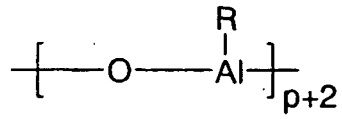

(VI)

oder linear wie in Formel (IV)

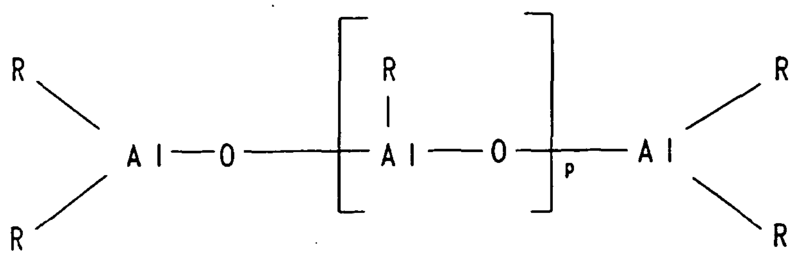

, (IV)

oder vom Cluster-Typ wie in Formel (V)

sein. Derartige Aluminoxane werden beispielsweise in JACS 117 (1995), 6465-74, Organometallics 13 (1994), 2957-2969, beschrieben.

Die Reste R in den Formeln (IV), (V), (VI) und (VII) können gleich oder verschieden sein und eine $C_1$-$C_{20}$-Kohlenwasserstoffgruppe wie eine $C_1$-$C_6$-Alkylgruppe, eine $C_6$-$C_{18}$-Arylgruppe, Benzyl oder Wasserstoff bedeuten, und p eine ganze Zahl von 2 bis 50, bevorzugt 10 bis 35 bedeuten.

Bevorzugt sind die Reste R gleich und bedeuten Methyl, Isobutyl, n-Butyl, Phenyl oder Benzyl, besonders bevorzugt Methyl. Sind die Reste R unterschiedlich, so sind sie bevorzugt Methyl und Wasserstoff, Methyl und Isobutyl oder Methyl und n-Butyl, wobei Wasserstoff bzw. Isobutyl oder n-Butyl bevorzugt zu 0,01 - 40 % (Zahl der Reste R) enthalten sind.

Das Aluminoxan kann auf verschiedene Arten nach bekannten Verfahren hergestellt werden. Eine der Methoden ist beispielsweise, daß eine Aluminium-kohlenwasserstoffverbindung und/oder eine Hydridoaluminium-kohlenwasserstoffverbindung mit Wasser (gasförmig, fest, flüssig oder gebunden - beispielsweise als Kristallwasser) in einem inerten Lösungsmittel (wie z. B. Toluol) umgesetzt wird.

Zur Herstellung eines Aluminoxans mit verschiedenen Alkylgruppen R werden entsprechend der gewünschten Zusammensetzung und Reaktivität zwei verschiedene Aluminiumtrialkyle ($AlR_3$ + $AlR'_3$) mit Wasser umgesetzt (vgl. S. Pasynkiewicz, Polyhedron 9 (1990) 429 und EP-A-0,302,424).

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Als Lewis-Säure werden bevorzugt mindestens eine bor- oder aluminiumorganische Verbindung eingesetzt, die $C_1$-$C_{20}$-kohlenstoffhaltige Gruppen enthalten, wie verzweigte oder unverzweigte Alkyl- oder Halogenalkyl, wie z.B. Methyl, Propyl, Isopropyl, Isobutyl, Trifluormethyl, ungesättigte Gruppen, wie Aryl oder Halogenaryl, wie Phenyl, Tolyl, Benzylgruppen, p-Fluorophenyl, 3,5-Difluorophenyl, Pentachlorophenyl, Pentafluorophenyl, 3,4,5 Trifluorophenyl und 3,5 Di(trifluoromethyl)phenyl.

Beispiele für Lewis-Säuren sind Trimethylaluminium, Triethylaluminium, Triisobutylaluminium, Tributylaluminium, Trifluoroboran, Triphenylboran,
Tris(4-fluorophenyl)boran, Tris(3,5-difluorophenyl)boran, Tris(4-fluoromethylphenyl)boran, Tris(pentafluorophenyl)boran, Tris(tolyl)boran, Tris(3,5-dimethylphenyl)boran, Tris(3,5-difluorophenyl)boran, $[(C_6F_5)_2BO]_2Al$-Me, $[(C_6F_5)_2BO]_3Al$ und/oder Tris(3,4,5-trifluorophenyl)boran. Insbesondere bevorzugt ist Tris(pentafluorophenyl)boran.

Als ionische Cokatalysatoren werden bevorzugt Verbindungen eingesetzt, die ein nicht koordinierendes Anion enthalten, wie beispielsweise Tetrakis(pentafluorophenyl)borate, Tetraphenylborate, $SbF_6^-$, $CF_3SO_3^-$ oder $ClO_4^-$.

Als kationisches Gegenion werden protonierte Lewis-Basen wie z.B. Methylamin, Anilin, Dimethylamin, Diethylamin, N-Methylanilin, Diphenylamin, N,N-Dimethylanilin, Trimethylamin, Triethylamin, Tri-n-butylamin, Methyldiphenylamin, Pyridin, p-Bromo-N,N-dimethylanilin, p-Nitro-N,N-dimethylanilin, Triethylphosphin, Triphenylphosphin, Diphenylphosphin, Tetrahydrothiophen oder das Triphenylcarbenium-Kation eingesetzt.

Beispiele für solche ionische Verbindungen sind
Triethylammoniumtetra(phenyl)borat,
Tributylammoniumtetra(phenyl)borat,
Tributylammoniumtetra(tolyl)borat,
Tributylammoniumtetra(pentafluorophenyl)borat,
Tributylammoniumtetra(pentafluorophenyl)aluminat,
Tripropylammoniumtetra(dimethylphenyl)borat,
Tributylammoniumtetra(trifluoromethylphenyl)borat,
Tributylammoniumtetra(4-fluorophenyl)borat,
N,N-Dimethylaniliniumtetra(phenyl)borat,
N,N-Diethylaniliniumtetra(phenyl)borat,
N,N-Dimethylaniliniumtetrakis(pentafluorophenyl)borate,
N,N-Dimethylaniliniumtetrakis(pentafluorophenyl)aluminat,
Di(propyl)ammoniumtetrakis(pentafluorophenyl)borat,
Di(cyclohexyl)ammoniumtetrakis(pentafluorophenyl)borat,
Triphenylphosphoniumtetrakis(phenyl)borat,
Triethylphosphoniumtetrakis(phenyl)borat,
Diphenylphosphoniumtetrakis(phenyl)borat,
Tri(methylphenyl)phosphoniumtetrakis(phenyl)borat,
Tri(dimethylphenyl)phosphoniumtetrakis(phenyl)borat,
Triphenylcarbeniumtetrakis(pentafluorophenyl)borat,
Triphenylcarbeniumtetrakis(pentafluorophenyl)aluminat,
Triphenylcarbeniumtetrakis(phenyl)aluminat,
Ferroceniumtetrakis(pentafluorophenyl)borat und/oder
Ferroceniumtetrakis(pentafluorophenyl)aluminat.
Bevorzugt sind Triphenylcarbeniumtetrakis(pentafluorophenyl)borat und/oder
N,N-Dimethylaniliniumtetrakis(pentafluorophenyl)borat.

Es können auch Gemische mindestens einer Lewis-Säure und mindestens einer ionischen Verbindung eingesetzt werden.

Als Cokatalysatorkomponenten sind ebenfalls Boran- oder Carboran-Verbindungen wie z.B. 7,8-Dicarbaundecaboran(13),
Undecahydrid-7,8-dimethyl-7,8-dicarbaundecaboran,
Dodecahydrid-1-phenyl-1,3-dicarbanonaboran,
Tri(butyl)ammoniumundecahydrid-8-ethyl-7,9-dicarbaundecaborat,
4-Carbanonaboran(14)Bis(tri(butyl)ammonium)nonaborat,
Bis(tri(butyl)ammonium)undecaborat,
Bis(tri(butyl)ammonium)dodecaborat,
Bis(tri(butyl)ammonium)decachlorodecaborat,
Tri(butyl)ammonium-1-carbadecaborate,
Tri(butyl)ammonium-1-carbadodecaborate,
Tri(butyl)ammonium-1-trimethylsilyl-1-carbadecaborate,
Tri(butyl)ammoniumbis(nonahydrid-1,3-dicarbonnonaborat)cobaltate(III),
Tri(butyl)ammoniumbis(undecahydrid-7,8-dicarbaundecaborat)ferrat(III)
von Bedeutung.

Als weitere Cokatalysatoren, die ungeträgert oder geträgert vorliegen können, sind die in EP-A-0924223, DE -A-19622207, EP-A-0601830, EP-A-0824112, EP-A-0824113, WO 99/06414, EP-A-0811627 und DE-A-19804970 genannten Verbindungen zu verwenden.

Die Trägerkomponente des erfindungsgemäßen Katalysatorsystems kann ein beliebiger organischer oder anorganischer, inerter Feststoff sein, insbesondere ein poröser Träger wie Talk, anorganische Oxide und feinteilige Polymerpulver (z.B. Polyolefine).

Geeignete anorganische Oxide finden sich in den Gruppen 2,3,4,5,13,14,15 und 16 des Periodensystems der Elemente. Beispiele für als Träger bevorzugte Oxide umfassen Siliciumdioxid, Aluminiumoxid, sowie Mischoxide der beiden Elemente und entsprechende Oxid-Mischungen. Andere anorganische Oxide, die allein oder in Kombination mit den zuletzt genannten bevorzugten oxiden Trägern eingesetzt werden können, sind z.B. MgO, $ZrO_2$, $TiO_2$ oder $B_2O_3$, um nur einige zu nennen.

Die verwendeten Trägermaterialien weisen eine spezifische Oberfläche im Bereich von 10 bis 1000 $m^2/g$, ein Porenvolumen im Bereich von 0,1 bis 5 ml/g und eine mittlere Partikelgröße von 1 bis 500 µm auf. Bevorzugt sind Träger

mit einer spezifischen Oberfläche im Bereich von 50 bis 500 $m^2/g$ , einem Porenvolumen im Bereich zwischen 0,5 und 3,5 ml/g und einer mittleren Partikelgröße im Bereich von 5 bis 350 μm. Besonders bevorzugt sind Träger mit einer spezifischen Oberfläche im Bereich von 200 bis 400 $m^2/g$, einem Porenvolumen im Bereich zwischen 0,8 bis 3,0 ml/g und einer mittleren Partikelgröße von 10 bis 200 μm.

Wenn das verwendete Trägermaterial von Natur aus einen geringen Feuchtigkeitsgehalt oder Restlösemittelgehalt aufweist, kann eine Dehydratisierung oder Trocknung vor der Verwendung unterbleiben. Ist dies nicht der Fall, wie bei dem Einsatz von Silicagel als Trägermaterial, ist eine Dehydratisierung oder Trocknung empfehlenswert. Die thermische Dehydratisierung oder Trocknung des Trägermaterials kann unter Vakuum und gleichzeitiger Inertgasüberlagerung (z.B. Stickstoff) erfolgen. Die Trocknungstemperatur liegt im Bereich zwischen 100 und 1000 °C, vorzugsweise zwischen 200 und 800 °C. Der Parameter Druck ist in diesem Fall nicht entscheidend. Die Dauer des Trocknungsprozesses kann zwischen 1 und 24 Stunden betragen. Kürzere oder längere Trocknungsdauern sind möglich, vorausgesetzt, daß unter den gewählten Bedingungen die Gleichgewichtseinstellung mit den Hydroxylgruppen auf der Trägeroberfläche erfolgen kann, was normalerweise zwischen 4 und 8 Stunden erfordert.

Eine Dehydratisierung oder Trocknung des Trägermaterials ist auch auf chemischem Wege möglich, indem das adsorbierte Wasser und die Hydroxylgruppen auf der Oberfläche mit geeigneten Inertisierungsmitteln zur Reaktion gebracht werden. Durch die Umsetzung mit dem Inertisierungsreagenz können die Hydroxylgruppen vollständig oder auch teilweise in eine Form überführt werden, die zu keiner negativen Wechselwirkung mit den katalytisch aktiven Zentren führen. Geeignete Inertisierungsmittel sind beispielsweise Siliciumhalogenide und Silane, wie Siliciumtetrachlorid, Chlortrimethylsilan, Dimethylaminotrichlorsilan oder metallorganische Verbindungen von Aluminium, Bor und Magnesium wie beispielsweise Trimethylaluminium, Triethylaluminium, Triisobutylaluminium, Triethylboran, Dibutylmagnesium. Die chemische Dehydratisierung oder Inertisierung des Trägermaterials erfolgt beispielsweise dadurch, daß man unter Luft- und Feuchtigkeitsausschluß eine Suspension des Trägermaterials in einem geeigneten Lösungsmittel mit dem Inertisierungsreagenz in reiner Form oder gelöst in einem geeigneten Lösungsmittel zur Reaktion bringt. Geeignete Lösungsmittel sind z.B. aliphatische oder aromatische Kohlenwasserstoffe wie Pentan, Hexan, Heptan, Toluol oder Xylol. Die Inertisierung erfolgt bei Temperaturen zwischen 25 °C und 120 °C, bevorzugt zwischen 50 und 70 °C. Höhere und niedrigere Temperaturen sind möglich. Die Dauer der Reaktion beträgt zwischen 30 Minuten und 20 Stunden, bevorzugt 1 bis 5 Stunden. Nach dem vollständigen Ablauf der chemischen Dehydratisierung wird das Trägermaterial durch Filtration unter Inertbedingungen isoliert, ein- oder mehrmals mit geeigneten inerten Lösungsmitteln wie sie bereits zuvor beschrieben worden sind gewaschen und anschließend im Inertgasstrom oder im Vakuum getrocknet.

Organische Trägermaterialien wie feinteilige Polyolefinpulver (z.B. Polyethylen, Polypropylen oder Polystyrol) können auch verwendet werden und sollten ebenfalls vor dem Einsatz von anhaftender Feuchtigkeit, Lösungsmittelresten oder anderen Verunreinigungen durch entsprechende Reinigungs- und Trocknungsoperationen befreit werden.

Das Katalysatorsystem wird erfindungsgemäß hergestellt, indem mindestens ein erfindungsgemäßes Metallocen, mindestens ein Cokatalysator und mindestens ein inertisierter Träger gemischt werden.

Zur Darstellung des geträgerten Katalysatorsystems wird mindestens eine der oben beschriebenen Metallocen-Komponenten in einem geeigneten Lösungsmittel mit mindestens einer Cokatalysatorkomponente in Kontakt gebracht, wobei bevorzugt ein lösliches Reaktionsprodukt , ein Addukt oder ein Gemisch erhalten wird. Die so erhaltene Zubereitung wird dann mit dem dehydratisierten oder inertisierten Trägermaterial vermischt, das Lösungsmittel entfernt und das resultierende geträgerte Metallocen-Katalysatorsystem getrocknet, um sicherzustellen, daß das Lösungsmittel vollständig oder zum größten Teil aus den Poren des Trägermaterials entfernt wird. Der geträgerte Katalysator wird als frei fließendes Pulver erhalten.

Ein Verfahren zur Darstellung eines frei fließenden und gegebenenfalls vorpolymerisierten geträgerten Katalysatorsystems umfaßt die folgenden Schritte:

a) Herstellung einer Metallocen/Cokatalysator-Mischung in einem geeigneten Lösungs- oder Suspensionsmittel, wobei die Metallocen-Komponente eine der zuvor beschriebenen Strukturen besitzt.

b) Aufbringen der Metallocen/Cokatalysatormischung auf einen porösen, bevorzugt anorganischen dehydratisierten Träger.

c) Entfernen des Hauptanteils an Lösungsmittel von der resultierenden Mischung.

d) Isolierung des geträgerten Katalysatorsystems.

e) Gegebenenfalls eine Vorpolymerisation des erhaltenen geträgerten Katalysatorsystems mit einem oder mehreren olefinischen Monomer(en), um ein vorpolymerisiertes geträgertes Katalysatorsystem zu erhalten.

Bevorzugte Lösungsmittel für die Herstellung der Metallocen/Cokatalysator-Mischung sind Kohlenwasserstoffe

und Kohlenwasserstoffgemische, die bei der gewählten Reaktionstemperatur flüssig sind und in denen sich die Einzelkomponenten bevorzugt lösen. Die Löslichkeit der Einzelkomponenten ist aber keine Voraussetzung, wenn sichergestellt ist, daß das Reaktionsprodukt aus Metallocen- und Cokatalysatorkomponenten in dem gewählten Lösungsmittel löslich ist. Beispiele für geeignete Lösungsmittel umfassen Alkane wie Pentan, Isopentan, Hexan, Heptan, Octan, und Nonan; Cycloalkane wie Cyclopentan und Cyclohexan; und Aromaten wie Benzol, Toluol. Ethylbenzol und Diethylbenzol. Ganz besonders bevorzugt ist Toluol.

Die bei der Präparation des geträgerten Katalysatorsystems eingesetzten Mengen an Aluminoxan und Metallocen können über einen weiten Bereich variiert werden. Bevorzugt wird ein molares Verhältnis von Aluminium zum Übergangsmetall im Metallocen von 10 : 1 bis 1000 : 1 eingestellt, ganz besonders bevorzugt ein Verhältnis von 50 : 1 bis 500 : 1.

Im Fall von Methylaluminoxan werden bevorzugt 30 % ige toluolische Lösungen eingesetzt; die Verwendung von 10 %igen Lösungen ist aber auch möglich.

Zur Voraktivierung wird das Metallocen in Form eines Feststoffes in einer Lösung des Aluminoxans in einem geeigneten Lösungsmittel aufgelöst. Es ist auch möglich, das Metallocen getrennt in einem geeigneten Lösungsmittel aufzulösen und diese Lösung anschließend mit der Aluminoxan-Lösung zu vereinigen. Bevorzugt wird Toluol verwendet.

Die Voraktivierungszeit beträgt 1 Minute bis 200 Stunden.

Die Voraktivierung kann bei Raumtemperatur (25 °C) stattfinden. Die Anwendung höherer Temperaturen kann im Einzelfall die erforderliche Dauer der Voraktivierung verkürzen und eine zusätzliche Aktivitätssteigerung bewirken. Höhere Temperatur bedeutet in diesem Fall ein Bereich zwischen 50 und 100 °C.

Die voraktivierte Lösung bzw. das Metallocen/Cokatalysator-Gemisch wird anschließend mit einem inerten Trägermaterial, üblicherweise Kieselgel, das in Form eines trockenen Pulvers oder als Suspension in einem der oben genannten Lösungsmittel vorliegt, vereinigt. Bevorzugt wird das Trägermaterial als Pulver eingesetzt. Die Reihenfolge der Zugabe ist dabei beliebig. Die voraktivierte Metallocen-Cokatalysator-Lösung bzw. das Metallocen-Cokatalysatorgemisch kann zum vorgelegten Trägermaterial dosiert, oder aber das Trägermaterial in die vorgelegte Lösung eingetragen werden.

Das Volumen der voraktivierten Lösung bzw. des Metallocen-Cokatalysator-Gemisches kann 100 % des Gesamtporenvolumens des eingesetzten Trägermaterials überschreiten oder aber bis zu 100 % des Gesamtporenvolumens betragen.

Die Temperatur, bei der die voraktivierte Lösung bzw. das Metallocen-Cokatalysatorgemisch mit dem Trägermaterial in Kontakt gebracht wird, kann im Bereich zwischen 0 und 100 °C variieren. Niedrigere oder höhere Temperaturen sind aber auch möglich.

Anschließend wird das Lösungsmittel vollständig oder zum größten Teil vom geträgerten Katalysatorsystem entfernt, wobei die Mischung gerührt und gegebenenfalls auch erhitzt werden kann. Bevorzugt wird sowohl der sichtbare Anteil des Lösungsmittels als auch der Anteil in den Poren des Trägermaterials entfernt. Das Entfernen des Lösungsmittels kann in konventioneller Art und

Weise unter Anwendung von Vakuum und/oder Spülen mit Inertgas erfolgen. Beim Trocknungsvorgang kann die Mischung erwärmt werden, bis das freie Lösungsmittel entfernt worden ist, was üblicherweise 1 bis 3 Stunden bei einer vorzugsweise gewählten Temperatur zwischen 30 und 60 °C erfordert. Das freie Lösungsmittel ist der sichtbare Anteil an Lösungsmittel in der Mischung. Unter Restlösungsmittel versteht man den Anteil, der in den Poren eingeschlossen ist.

Alternativ zu einer vollständigen Entfernung des Lösungsmittels kann das geträgerte Katalysatorsystem auch nur bis zu einem gewissen Restlösungsmittelgehalt getrocknet werden, wobei das freie Lösungsmittel vollständig entfernt worden ist. Anschließend kann das geträgerte Katalysatorsystem mit einem niedrig siedenden Kohlenwasserstoff wie Pentan oder Hexan gewaschen und erneut getrocknet werden.

Das dargestellte geträgerte Katalysatorsystem kann entweder direkt zur Polymerisation von Olefinen eingesetzt oder vor seiner Verwendung in einem Polymerisationsprozeß mit einem oder mehreren olefinischen Monomeren vorpolymerisiert werden. Die Ausführung der vorpolymerisation von geträgerten Katalysatorsystemen ist beispielsweise in WO 94/28034 beschrieben.

Als Additiv kann während oder nach der Herstellung des geträgerten Katalysatorsystems eine geringe Menge eines Olefins, bevorzugt eines $\alpha$-Olefins (beispielsweise Styrol oder Phenyldimethylvinylsilan) als aktivitätssteigernde Komponente, oder beispielsweise eines Antistatikums zugesetzt werden.

Als Antistatikum wird üblicherweise eine Mischung aus einem Metallsalz der Medialansäure, einem Metallsalz der Anthranilsäure und einem Polyamin eingesetzt. Derartige Antistatika werden beispielsweise in EP-A-0,636,636 beschrieben.

Das molare Verhältnis von Additiv zu Metallocenkomponente Verbindung (I) beträgt dabei bevorzugt zwischen 1 : 1000 bis 1000 : 1, ganz besonders bevorzugt 1 : 20 bis 20 : 1.

Die vorliegende Erfindung betrifft auch ein Verfahren zur Herstellung eines Polyolefins durch Polymerisation eines oder mehrerer Olefine in Gegenwart des Katalysatorsystems, enthaltend mindestens eine Übergangsmetallkomponente der erfindungsgemäßen Metallocene der Formel I oder II. Unter dem Begriff Polymerisaten wird eine Homopolymerisation wie auch eine Copolymerisation verstanden.

Die erfindungsgemäßen Verbindungen der Formeln (I) und (II) zeigen gegenüber den Dihalogen-Verbindungen zumindest gleichwertige, zum Teil jedoch höhere, Aktivitäten in der Polymerisation von Olefinen, und die erhaltenen Polyolefine zeigen eine Verminderung der unerwünschten niedermolekularen extrahierbaren Anteile.

Das dargestellte Katalysatorsystem kann als einzige Katalysatorkomponente für die Polymerisation von Olefinen mit 2 bis 20 C-Atomen eingesetzt werden, oder bevorzugt in Kombination mit mindestens einer Alkylverbindung der Elemente aus der I. bis III. Hauptgruppe des Periodensystems, wie z.B. einem Aluminium-, Magnesium- oder Lithiumalkyl oder einem Aluminoxan eingesetzt werden. Die Alkylverbindung wird dem Monomeren oder Suspensionsmittel zugesetzt und dient zur Reinigung der Monomere von Substanzen, die die Katalysatoraktivität beeinträchtigen können. Die Menge der zugesetzten Alkylverbindung hängt von der Qualität der eingesetzten Monomere ab.

Als Molmassenregler und/oder zur Steigerung der Aktivität wird, falls erforderlich, Wasserstoff zugegeben.

Bei der Polymerisation kann das Antistatikum zusammen mit oder getrennt von dem eingesetzten Katalysatorsystem in das Polymerisationssystem eindosiert werden.

Die mit dem Katalysatorsystem, das mindestens eines der erfindungsgemäßen Metallocene der Formeln (I) und/oder (II) enthält, dargestellten Polymere, zeigen eine gleichmäßige Kornmorphologie und weisen keine Feinkornanteile auf. Bei der Polymerisation mit dem Katalysatorsystem treten keine Beläge oder Verbackungen auf.

Mit dem Katalysatorsystem werden Polymere, wie Polypropylen mit außerordentlich hoher Stereo- und Regiospezifität erhalten.

Besonders charakteristisch für die Stereo- und Regiospezifität von Polymeren, insbesondere von Polypropylen, ist die Triaden-Taktizität (TT) und der Anteil an 2-1-insertierten Propeneinheiten (RI), die sich aus den $^{13}$C-NMR-Spektren ermitteln lassen.

Die $^{13}$C-NMR- Spektren werden in einem Gemisch aus Hexachlorbutadien und Tetrachlorethan-$d_2$ bei erhöhter Temperatur (365 K) gemessen. Alle $^{13}$C-NMR-Spektren der gemessenen Polypropylen-Proben werden auf das Resonanzsignal von Tetrachlorethan-$d_2$ ($\delta$ = 73.81 ppm) geeicht.

Zur Bestimmung der Triaden-Taktizität des Polypropylens werden die Methyl-Resonanzsignale im $^{13}$C-NMR-Spektrum zwischen 23 und 16 ppm betrachtet; vgl. J. C. Randall, Polymer Sequence Determination: Carbon-13 NMR Method, Academic Press New York 1978; A. Zambelli, P. Locatelli, G. Bajo, F. A. Bovey, Macromolucules 8 (1975), 687-689; H. N. Cheng, J. A. Ewen, Makromol. Chem. 190 (1989), 1931-1943. Drei aufeinander folgende 1-2-insertierte Propeneinheiten, deren Methylgruppen in der "Fischer-Projektion" auf der gleichen Seite angeordnet sind, bezeichnet man als mm - Triade ($\delta$ = 21.0 ppm bis 22.0 ppm). Zeigt nur die zweite Methylgruppe der drei aufeinander folgenden Propeneinheiten zur anderen Seite, spricht man von einer rr-Triade ($\delta$ = 19.5 ppm bis 20.3 ppm) und zeigt nur die dritte Methylgruppe der drei aufeinander folgenden Propeneinheiten zur anderen Seite, von einer mr-Triade ($\delta$ = 20.3 ppm bis 21.0 ppm). Die Triaden-Taktizität berechnet man nach folgender Formel:

$$TT\ (\%) = mm / (mm + mr + rr) \cdot 100$$

Wird eine Propeneinheit invers in die wachsende Polymerkette insertiert, spricht man von einer 2-1-Insertion; vgl. T. Tsutsui, N. Ishimaru, A. Mizuno, A. Toyota, N. Kashiwa, Polymer 30, (1989), 1350-56. Folgende verschiedene strukturelle Anordnungen sind möglich:

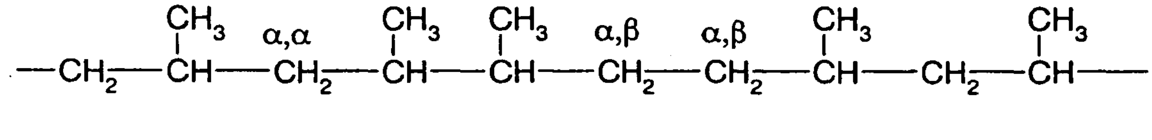

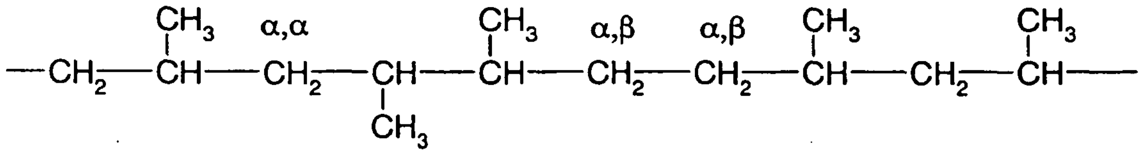

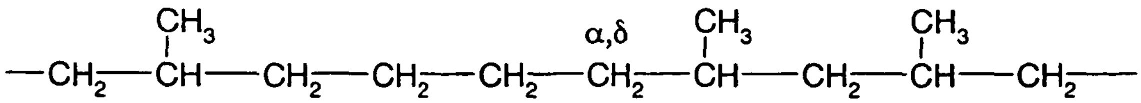

Der Anteil an 2-1-insertierten Propeneinheiten (RI) kann nach folgender Formel berechnet werden:

$$RI\ (\%) = 0.5\ I\alpha,\beta\ (I\alpha,\alpha + I\alpha,\beta + I\alpha,\delta) \cdot 100,$$

wobei

$I\alpha,\alpha$ die Summe der Intensitäten der Resonanzsignale bei $\delta$ = 41.84, 42.92 und 46.22 ppm,

$I\alpha,\beta$ die Summe der Intensitäten der Resonanzsignale bei $\delta$ = 30.13, 32.12, 35.11 und 35.57 ppm

sowie

$I\alpha,\delta$ die Intensität des Resonanzsignals bei $\delta$ = 37.08 ppm bedeuten.

Das isotaktische Polypropylen, das mit dem Katalysatorsystem hergestellt worden ist, zeichnet sich durch einen Anteil an 2-1-insertierten Propeneinheiten RI < 0.5% bei einer Triaden-Taktizität TT > 98.0% und einen Schmelzpunkt > 153°C aus, wobei $M_w/M_n$ des erfindungsgemäßen Polypropylens zwischen 2.5 und 3.5 liegt.

Die mit dem Katalysatorsystem herstellbaren Copolymere zeichnen sich durch eine gegenüber dem Stand der Technik deutlich höhere Molmasse aus. Gleichzeitig sind solche Copolymere durch Einsatz des Katalysatorsystems mit hoher Produktivität bei technisch relevanten Prozessparametern ohne Belagsbildung herstellbar.

Die nach dem Verfahren hergestellten Polymere sind insbesondere zur Herstellung reißfester, harter und steifer Formkörper wie Fasern, Filamente, Spritzgußteile, Folien, Platten oder Großhohlkörpern (z.B. Rohre) geeignet.

Die Erfindung wird durch folgende, die Erfindung jedoch nicht einschränkende Beispiele erläutert.

Allgemeine Angaben: Die Herstellung und Handhabung der organometallischen Verbindungen erfolgte unter Ausschluß von Luft und Feuchtigkeit unter Argon-Schutzgas (Schlenk-Technik bzw. Glove-Box). Alle benötigten Lösungsmittel wurden vor Gebrauch mit Argon gespült und über Molsieb absolutiert.

Beispiel 1: Dimethylsilandiyl-bis(2-methyl-4,5-benzo-indenyl)-zirkonium-monochloro-mono-(2,4-di-tert.-butyl-phenolat) (1)

20.6 g (0.1 mol) 2,4-Di-tert.-butylphenol wurden in 200 ml Toluol/20 ml THF bei Raumtemperatur mit 37.2 ml (0.1 mol) einer 20%igen Lösung von Butyllithium in Toluol versetzt. Es wurde 1 h bei 60°C nachgerührt. Bei Raumtemperatur wurden 28.8 g (0.05 mol) Dimethylsilandiybis(2-methyl-4,5-benzo-indenyl)-zirkoniumdichlorid als Feststoff zugegeben. Die Suspension wurde 3h bei 100°C gerührt und anschließend heiß über Celite filtriert. Der Filterkuchen wurde noch 3 mal mit je 100 ml Toluol (100°C) extrahiert. Nach Einengen des Lösungsmittels wurde der ausgefallene gelbe Feststoff abfiltriert und im Vakuum getrocknet. Es wurden 31.1 g (83 %) Dimethylsilandiyl-bis(2-methyl-4,5-benzo-indenyl)-zirkonium-monochloro-mono-(2,4-di-tert.-butyl-phenolat) (1) erhalten. 1H-NMR (400 MHz, $CDCl_3$): 8.05 (dd,1H),

7.75 (m, 2H), 7.65 (dd, 1H), 7.60 (1H), 7.5 - 7.15 (m, 6H), 7.1 (m, 1H), 7.0 (m, 1H), 6.85 (s, 1H), 6.8 (d, 1H), 6.65 (m, 1H), 5.45 (d, 1H), 2.82 (s, 3H), 2. 45 (s, 3H), 1.45 (s, 3H), 1.35 (s, 3H), 1.25 (s, 9H), 0.95 (s, 9H).

Löslichkeitsvergleich:

50 mg Dimethylsilandiyl-bis(2-methyl-4,5-benzo-indenyl)-zirkoniumdichlorid lösten sich bei Raumtemperatur vollständig in 240 ml Toluol (Löslichkeit ca. 0.36 mmol/l).

50 mg der Verbindung (1) lösten sich bei Raumtemperatur in < 5 ml Toluol sofort auf (Löslichkeit > 13 mmol/l).

Beispiel la: Katalysatordarstellung mit (1) und Polymerisation:

35,1 mg (0,047 mmol) (1) wurden in 2,1 ml 30%-iger MAO-Lösung in Toluol (Al/Zr=215) für 60 Minuten bei Raumtemperatur gerührt. Anschließend wurden 2 g $SiO_2$ (Grace XPO2107, vorbehandelt bei 140°C, 10 mbar, 10 Std.) dazugegeben und weitere 10 Minuten gerührt. Das Lösungsmittel wurde im Ölpumpenvakuum entfernt.

Ein trockener 21-Reaktor wurde zunächst mit Stickstoff und anschließend mit Propylen gespült und mit 1,5 l flüssigem Propylen befüllt. Dazu wurden 2 ml TEA (20% ig in Varsol) gegeben und 15 Minuten gerührt. Anschließend wurde das oben hergestellte Katalysatorsystem (0,886 g) in 20 ml Heptan resuspendiert eingespritzt und mit 15 ml Heptan nachgespült. Das Reaktionsgemisch wurde auf die Polymerisationstemperatur von 60°C aufgeheizt und 1 Stunde polymerisiert. Gestoppt wurde die Polymerisation durch Abgasen des restlichen Propylens. Das Polymer wurde im Vakuumtrockenschrank getrocknet. Es resultierten 470 g Polypropylen-Pulver. Der Reaktor zeigte keine Beläge an der Innenwand oder Rührer. Die Katalysatoraktivität betrug 0,53 kg PP/g Katalysator x h.

Vergleichsbeispiel: Katalysatordarstellung mit Dimethylsilandiyl-bis-(2-methyl-4,5-benzo-indenyl)-zirkoniumdichlorid und Polymerisation

27,1 mg (0,047 mmol) Dimethylsilandiyl-bis-(2-methyl-4,5-benzoindenyl)-zirkoniumdichlorid wurden in 2,1 ml 30%-iger MAO-Lösung in Toluol (Al/Zr=215) für 60 Minuten bei Raumtemperatur gerührt. Anschließend wurden 2 g $SiO_2$ (Grace XPO2107, vorbehandelt bei 140°C, 10 mbar, 10 Std.) dazugegeben und weitere 10 Minuten gerührt. Das Lösungsmittel wurde im Ölpumpenvakuum entfernt.

Ein trockener 21-Reaktor wurde zunächst mit Stickstoff und anschließend mit Propylen gespült und mit 1,5 l flüssigem Propylen befüllt. Dazu wurden 2 ml TEA (20% ig in Varsol) zugegeben und 15 Minuten gerührt. Anschließend wurde das oben hergestellte Katalysatorsystem (0,897 g) in 20 ml Heptan resuspendiert eingespritzt und mit 15 ml Heptan nachgespült. Das Reaktionsgemisch wurde auf die Polymerisationstemperatur von 60°C aufgeheizt und 1 Stunde polymerisiert. Gestoppt wurde die Polymerisation durch Abgasen des restlichen Propylens. Das Polymer wurde im Vakuumtrockenschrank getrocknet. Es resultierten 410 g Polypropylen-Pulver. Der Reaktor zeigte keine Beläge an der Innenwand oder Rührer. Die Katalysatoraktivität betrug 0,46 kg PP/g Katalysator x h.

Beispiel 2: Dimethylsilandiyl-bis(2-methyl-indenyl)-zirkonium-monochloro-mono-(2,4-di-tert.-butyl-phenolat) (2)

1.03 g (5 mmol) 2,4-Di-tert.-butylphenol wurden in 10 ml Toluol/1 ml THF bei Raumtemperatur mit 1.85 ml (5 mmol) einer 20%igen Lösung von Butyllithium in Toluol versetzt. Es wurde 1 h bei 60°C nachgerührt. Bei Raumtemperatur wurden 1.19 g (2.5 mmol) Dimethylsilandiybis(2-methyl-indenyl)-zirkoniumdichlorid als Feststoff zugegeben. Die Suspension wurde 2h bei 60°C gerührt und anschließend heiß über Celite filtriert. Der Filterkuchen wurde noch 3 mal mit je 10 ml Toluol (60°C) extrahiert. Nach Einengen des Lösungsmittels wurde der ausgefallene gelbe Feststoff abfiltriert und im Vakuum getrocknet. Es wurden 0.87 g (53 %) Dimethylsilandiyl-bis(2-methyl-indenyl)-zirkonium-monochloro-mono-(2,4-di-tert.-butyl-phenolat) (2) erhalten. 1H-NMR (400 MHz, $CDCl_3$): 8.03 (dd,1H), 7.6 (dd, 1H), 7.25 - 7.2 (m, 2H), 7.15 (m, 1H), 7.1-7.0 (m, 2H), 6.9 (m, 1H), 6.8 (s, 1H), 6.75 (m, 1H), 6.7 (m, 1H), 6.3 (s, 1H), 5.55 (d, 1H), 2.65 (s, 3H), 2. 3 (s, 3H), 1.3 (s, 3H), 1.25 (s, 9H), 1.22 (s, 3H), 1.15 (s, 9H).

Löslichkeitsvergleich:

50 mg Dimethylsilandiyl-bis(2-methyl-indenyl)-zirkoniumdichlorid lösten sich bei Raumtemperatur vollständig in 50 ml Toluol (Löslichkeit ca. 2.1 mmol/l).

50 mg der Verbindung (2) lösten sich bei Raumtemperatur in < 5 ml Toluol sofort auf (Löslichkeit > 15 mmol/l).

Beispiel 3: Dimethylsilandiyl-bis(2-methyl-4,5-benzo-indenyl)-zirkonium-monochloro-mono-(2-isopropyl-5-methyl-phenolat) (3)

2.7 g (17.4 mmol) 2-Isopropyl-5-methylphenol wurden in 20 ml Toluol/2 ml THF bei Raumtemperatur mit 6.5 ml (17.4 mmol) einer 20%igen Lösung von Butyllithium in Toluol versetzt. Es wurde 1 h bei 60°C nachgerührt. Bei Raumtemperatur wurden 5.0 g (8.7 mmol) Dimethylsilandiyl-bis(2-methyl-4,5-benzo-indenyl)-zirkoniumdichlorid als Feststoff zugegeben. Die Suspension wurde 4h bei 100°C gerührt und anschließend heiß über Celite filtriert. Der Filterkuchen wurde noch 2 mal mit je 25 ml Toluol (100°C) extrahiert. Nach Einengen des Lösungsmittels wurde der ausgefallene gelbe Feststoff abfiltriert und im Vakuum getrocknet. Es wurden 2.5 g (41 %) Dimethylsilandiyl-bis(2-methyl-4,5-benzo-indenyl)-zirkonium-monochloro-mono-(2-isopropyl-5-methyl-phenolat) (3) erhalten.
1H-NMR (400 MHz, $CDCl_3$): 7.9 (dd,1H), 7.81 (m, 1H), 7.74 (m, 1H), 7.54 (m, 2H), 7.45 - 7.08 (m, 8H), 6.65 (d, 1H), 6.55 (s, 1H), 6.35 (m, 1H), 5.56 (d, 1H), 2.58 (s, 3H), 2. 35 (s, 3H), 2.3 (m, 1H), 2.1 (s, 3H), 1.37 (s, 3H), 1.27 (s, 3H), 0.75 (d, 3H), 0.62 (d, 3H).

Löslichkeitsvergleich:

50 mg Dimethylsilandiyl-bis(2-methyl-4,5-benzo-indenyl)-zirkoniumdichlorid lösten sich bei Raumtemperatur vollständig in 240 ml Toluol (Löslichkeit ca. 0.36 mmol/l).
50 mg der Verbindung (3) lösten sich bei Raumtemperatur in 4 ml Toluol auf (Löslichkeit ca. 18 mmol/l).

Beispiel 4: Dimethylsilandiyl-bis(2-methyl-indenyl)-zirkonium-monochloro-mono-(2-isopropyl-5-methyl-phenolat) (4)

3.2 g (21 mmol) 2-Isopropyl-5-methylphenol wurden in 20 ml Toluol/2 ml THF bei Raumtemperatur mit 7.8 ml (21 mmol) einer 20%igen Lösung von Butyllithium in Toluol versetzt. Es wurde 1 h bei 60°C nachgerührt. Bei Raumtemperatur wurden 5.0 g (10.5 mmol) Dimethylsilandiyl-bis(2-methyl-indenyl)-zirkoniumdichlorid als Feststoff zugegeben. Die Suspension wurde 2h bei 100°C gerührt und anschließend heiß über Celite filtriert. Der Filterkuchen wurde noch 2 mal mit je 25 ml Toluol (100°C) extrahiert. Nach Einengen des Lösungsmittels wurde der ausgefallene gelbe Feststoff abfiltriert und im Vakuum getrocknet. Es wurden 1.36 g (22 %) Dimethylsilandiyl-bis(2-methyl-indenyl)-zirkonium-monochloro-mono-(2-isopropyl-5-methyl-phenolat) (4) erhalten.
1H-NMR (400 MHz, $CDCl_3$): 8.0 (m, 1H), 7.81 (m, 1H), 7.3 - 6.8 (m, 8H), 6.55 (dm, 1H), 6.1 (s, 1H), 5.9 (d, 1H), 2.7 (hept, 1H), 2.45 (s, 3H), 2. 25 (s, 3H), 2.18 (s, 3H), 1.4 (s, 3H), 1.25 (s, 3H), 1.1 (d, 3H), 0.95 (d, 3H).

Löslichkeitsvergleich:

50 mg Dimethylsilandiyl-bis(2-methyl-indenyl)-zirkoniumdichlorid lösten sich bei Raumtemperatur vollständig in 50 ml Toluol (Löslichkeit ca. 2.1 mmol/l).
50 mg der Verbindung (4) lösten sich bei Raumtemperatur in 5 ml Toluol auf (Löslichkeit ca. 17 mmol/l).

Beispiel 5: Dimethylsilandiyl-bis(2-methyl-indenyl)-zirkonium-monochloro-mono-(2,4-di-methyl-phenolat) (5)

1.0 g (8.2 mmol) 2,4-Di-methylphenol wurden in 20 ml Toluol/2 ml THF bei Raumtemperatur mit 3.0 ml (8.2 mmol) einer 20%igen Lösung von Butyllithium in Toluol versetzt. Es wurde 1 h bei 60°C nachgerührt. Bei Raumtemperatur wurden 1.9 g (4.0 mmol) Dimethylsilandiyl-bis(2-methyl-indenyl)-zirkoniumdichlorid als Feststoff zugegeben. Die Suspension wurde 8h bei 60°C gerührt und anschließend heiß über Celite filtriert. Nach Einengen des Lösungsmittels auf ca. 7 ml wurde der bei -30°C ausgefallene gelbe Feststoff abfiltriert und im Vakuum getrocknet. Es wurden 0.65 g (29 %) Dimethylsilandiyl-bis(2-methyl-indenyl)-zirkonium-monochloro-mono-(2,4-di-methylphenolat) (5) erhalten.
1H-NMR (400 MHz, $CDCl_3$): 7.96 (dd, 1H), 7.6 (m, 1H), 7.36 (m, 1H), 7.31 (m, 1H), 7.29 (d, 1H), 7.1 (m, 1H), 6.99 (m, 1H), 6.94 (m, 1H), 6.88 (s, 1H), 6.75 (m, 1H), 6.65 (m, 1H), 6.06 (s, 1H), 5.93 (d, 1H), 2.4 (s, 3H), 2. 24 (s, 3H), 2.18 (s, 3H), 1.85 (s, 3H), 1.35 (s, 3H), 1.24 (s, 3H).

Beispiel 6: Dimethylsilandiyl-bis(2-methyl-4,5-benzoindenyl)-zirkonium-monochloro-mono-(2,4-di-tert.pentyl-phenolat) (6)

0.85 g (3.5 mmol) 2,4-Di-tert.-pentyl-phenol wurden in 10 ml Toluol/l ml THF bei Raumtemperatur mit 1.3 ml (3.5 mmol) einer 20%igen Lösung von Butyllithium in Toluol versetzt. Es wurde 1 h bei 60°C nachgerührt. Bei Raumtemperatur wurden 1.0 (1.74 mmol) Dimethylsilandiyl-bis(2-methyl-4,5-benzo-indenyl)-zirkoniumdichlorid als Feststoff zugegeben. Die Suspension wurde 4h bei 100°C gerührt, mit 40 ml Toluol verdünnt und anschließend heiß über Celite filtriert. Der Filterkuchen wurde noch 2 mal mit je 25 ml Toluol (100°C) extrahiert. Nach Einengen des Lösungsmittels

auf 10 ml wurde der ausgefallene gelbe Feststoff abfiltriert, mit wenig kaltem Toluol gewaschen und im Vakuum getrocknet. Es wurden 0.85 g (63 %) Dimethylsilandiyl-bis(2-methyl-4,5-benzo-indenyl)-zirkonium-monochloro-mono-(2,4-di-tert.pentyl-phenolat) (6) erhalten. 1H-NMR (400 MHz, $CDCl_3$): 8.00 (d,1H), 7.74 (t, 2H), 7.64-7.57 (m, 2H), 7.45 - 7.27 (m, 5H),7.14 (s, 1H), 7.10 (m, 1H), 6.98 (m, 1H), 6.78 (s, 1H), 6.65 (d, 1H), 6.52 (dd, 1H), 5.38 (d, 1H), 2.78 (s, 3H), 2. 41 (s, 3H), 1.46 (quart., 2H), 1.41 (s, 3H), 1.30 (s, 3H), 1.22 (m, 2H), 1.14 (s, 3H), 1.13 (s, 3H), 0.91 (s, 3H), 0.88 (s, 3H), 0.57 (t, 3H), 0.39 (t, 3H).

Löslichkeitsvergleich:

50 mg Dimethylsilandiyl-bis(2-methyl-4,5-benzo-indenyl)-zirkoniumdichlorid lösten sich bei Raumtemperatur vollständig in 240 ml Toluol (Löslichkeit ca. 0.36 mmol/l).

55 mg der Verbindung (6) lösten sich bei Raumtemperatur in 4 ml Toluol auf (Löslichkeit ca. 17.7 mmol/l).

## Patentansprüche

1. Verbindungen der Formel (I),

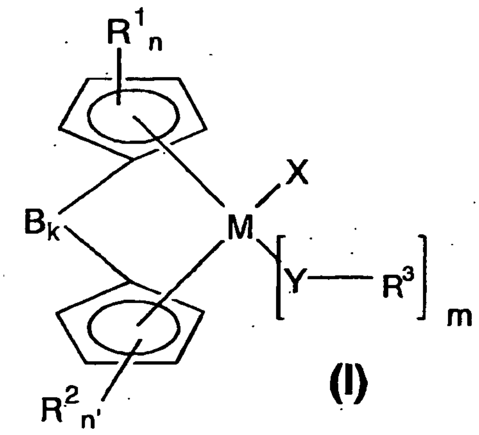

(I)

worin

M Ti, Zr oder Hf ist,
$R^1$ gleich oder verschieden sind und Rest $Si(R^{12})_3$ ist, worin $R^{12}$ gleich oder verschieden ein Wasserstoffatom oder eine $C_1$-$C_{40}$-kohlenstoffhaltige Gruppe, oder $R^1$ eine $C_1$-$C_{30}$ - kohlenstoffhaltige Gruppe, ist, oder zwei oder mehrere Reste $R^1$ können so miteinander verbunden sein, daß die Reste $R^1$ und die sie verbindenden Atome des Cyclopentadienylringes ein $C_4$-$C_{24}$-Ringsystem bilden, welches seinerseits substituiert sein kann,
$R^2$ gleich oder verschieden sind und ein Rest $Si(R^{12})_3$ ist, worin $R^{12}$ gleich oder verschieden ein Wasserstoffatom oder eine $C_1$-$C_{40}$-kohlenstoffhaltige Gruppe, oder $R^2$ eine $C_1$-$C_{30}$ - kohlenstoffhaltige Gruppe ist, oder zwei oder mehrere Reste $R^2$ können so miteinander verbunden sein, daß die Reste $R^2$ und die sie verbindenden Atome des Cyclopentadienylringes ein $C_4$-$C_{24}$-Ringsystem bilden, welches seinerseits substituiert sein kann,
$R^3$ gleich $C_7$-$C_{30}$-Alkylaryl, fluorhaltiges $C_6$-$C_{24}$-Aryl oder fluorhaltiges $C_7$-$C_{30}$-Alkylaryl ist,
X ein Halogenatom ist,
Y Sauerstoff ist,
n gleich 0 bis 4 ist,
n' gleich 0 bis 4 ist,
m gleich 1 ist,
k gleich 1 ist,
B ein verbrückendes Strukturelement zwischen den beiden Cyclopentadienylringen bezeichnet und einer oder beide Cyclopentadienylringe so substituiert sind, daß sie einen Indenylring darstellen.

2. Verbindungen gemäß Anspruch 1, **dadurch gekennzeichnet, daß** die Formel (I) der Formel (II)

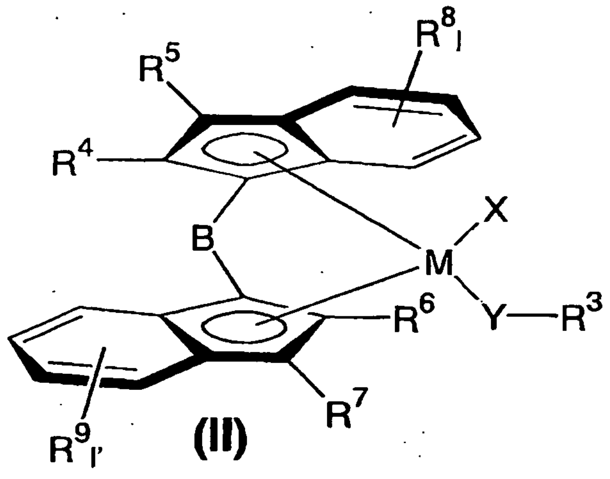

(II)

worin

M gleich Ti, Zr oder Hf ist,
$R^3$ $C_7$-$C_{30}$-Alkylaryl, fluorhaltiges $C_6$-$C_{24}$-Aryl, oder fluorhaltiges $C_7$-$C_{30}$-Alkylaryl ist,
$R^4$, $R^6$ gleich oder verschieden sind und ein Wasserstoffatom, eine $C_1$-$C_{20}$ - kohlenstoffhaltige Gruppe ist,
$R^5$, $R^7$ gleich oder verschieden sind und ein Wasserstoffatom, eine $C_1$-$C_{20}$ - kohlenstoffhaltige Gruppe ist,
$R^8$, $R^9$ gleich oder verschieden sind und ein Wasserstoffatom, Halogenatom oder eine $C_1$-$C_{20}$ - kohlenstoffhaltige Gruppe bedeuteten, und zwei Reste $R^8$ oder $R^9$ ein mono- oder polycyclisches Ringssystem bilden können, das seinerseits gegebenenfalls substituiert sein kann,
X ein Halogenatom ist,
Y Sauerstoff ist,
1, 1' gleich oder verschieden eine ganze Zahl zwischen Null und 4 ist
B ein verbrückendes Strukturelement zwischen den beiden Indenylresten bezeichnet, entspricht.

3. Verbindungen gemäß Anspruch 2, **dadurch gekennzeichnet, daß** in der Formel (II)

M gleich Zirkonium ist,
$R^3$ gleich $C_7$-$C_{30}$-Alkylaryl, fluorhaltiges $C_6$-$C_{24}$-Aryl oder fluorhaltiges $C_7$-$C_{30}$-Alkylaryl ist,
$R^4$, $R^6$ gleich oder verschieden sind und ein Wasserstoffatom, $C_1$-$C_{18}$-Alkyl, $C_2$-$C_{10}$-Alkenyl, $C_3$-$C_{15}$-Alkylalkenyl, $C_6$-$C_{18}$-Aryl, $C_5$-$C_{18}$-Heteroaryl, $C_7$-$C_{20}$-Arylalkyl, $C_7$-$C_{20}$-Alkylaryl, fluorhaltiges $C_1$-$C_{12}$-Alkyl, fluorhaltiges $C_6$-$C_{18}$-Aryl, fluorhaltiges $C_7$-$C_{20}$-Arylalkyl oder fluorhaltiges $C_7$-$C_{20}$-Alkylaryl ist,
$R^5$, $R^7$ gleich oder verschieden sind und ein Wasserstoffatom, $C_1$-$C_{18}$-Alkyl, $C_2$-$C_{10}$-Alkenyl, $C_3$-$C_{15}$-Alkylalkenyl, $C_6$-$C_{18}$-Aryl, $C_5$-$C_{18}$-Heteroaryl, $C_7$-$C_{20}$-Arylalkyl, $C_7$-$C_{20}$-Alkylaryl, fluorhaltiges $C_1$-$C_{12}$-Alkyl, fluorhaltiges $C_6$-$C_{18}$-Aryl, fluorhaltiges $C_7$-$C_{20}$-Arylalkyl oder fluorhaltiges $C_7$-$C_{20}$-Alkylaryl ist,
$R^8$, $R^9$ gleich oder verschieden sind und ein Wasserstoffatom, Halogenatom, eine lineare oder verzweigte $C_1$-$C_{18}$-Alkylgruppe, $C_2$-$C_{10}$-Alkenyl, $C_3$-$C_{15}$-Alkylalkenyl, eine $C_6$-$C_{18}$-Arylgruppe, die gegebenenfalls substituiert sein kann, $C_5$-$C_{18}$-Heteroaryl, $C_7$-$C_{20}$-Arylalkyl, $C_7$-$C_{20}$-Alkylaryl, fluorhaltiges $C_1$-$C_{12}$-Alkyl, fluorhaltiges $C_6$-$C_{18}$-Aryl, fluorhaltiges $C_7$-$C_{20}$-Arylalkyl oder fluorhaltiges $C_{7-}C_{20}$-Alkylaryl sind, und zwei Reste $R^8$ oder $R^9$ ein mono- oder polycyclisches Ringssystem bilden können, das seinerseits gegebenenfalls substituiert sein kann,
X Chlor, ist,
Y Sauerstoff ist,
1, 1' gleich oder verschieden eine ganze Zahl 1 oder 2 sind,
B ein verbrückendes Strukturelement zwischen den beiden Indenylresten bezeichnet.

4. Katalysator enthaltend mindestens eine Verbindung gemäß. Anspruch 1 und einen Träger, sowie gegebenenfalls einen Cokatalysator.

5. Verfahren zur Herstellung eines Polyolefins in Gegenwart eines Katalysators gemäß Anspruch 4.

**6.** Verwendung eines Katalysators gemäß Anspruch 4 zur Olefinpolymerisation.

## Claims

**1.** A compound of the formula (I),

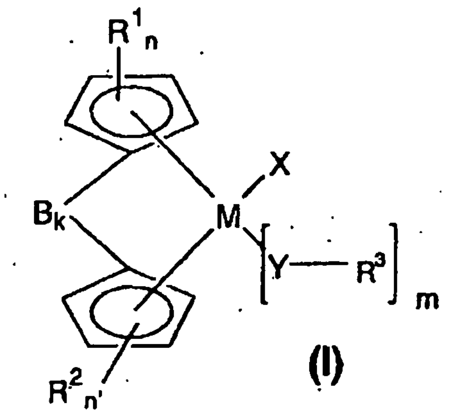

(I)

where

M is Ti, Zr or Hf,
$R^1$ are identical or different and are each a radical Si $(R^{12})_3$, where $R^{12}$ are identical or different and are each a hydrogen atom or a carbon-containing $C_1$-$C_{40}$-group, or $R^1$ is a carbon-containing $C_1$-$C_{30}$-group, or two or more radicals $R^1$ may be connected to one another in such a way that the radicals $R^1$ and the atoms of the cyclopentadienyl ring which connect them form a $C_4$-$C_{24}$-ring system which may in turn be substituted,
$R^2$ are identical or different and are each a radical $Si(R^{12})_3$, where $R^{12}$ are identical or different and are each a hydrogen atom or a carbon-containing $C_1$-$C_{40}$-group, or $R^2$ is a carbon-containing $C_1$-$C_{30}$-group, or two or more radicals $R^2$ may be connected to one another in such a way that the radicals $R^2$ and the atoms of the cyclopentadienyl ring which connect them form a $C_9$-$C_{24}$-ring system which may in turn be substituted,
$R^3$ is $C_7$-$C_{30}$-alkylaryl, fluorinated $C_6$-$C_{24}$-aryl or fluorinated $C_7$-$C_{30}$-alkylaryl,
X is a halogen atom,
Y is oxygen,
n is from 0 to 4,
n' is from 0 to 4,
m is 1,
k is 1,
B is a bridging structural element between the two cyclopentadienyl rings and the cyclopentadienyl rings are either or both substituted in such a way that they form an indenyl ring.

**2.** The compound according to claim 1, wherein the formula (I) corresponds to the formula (II)

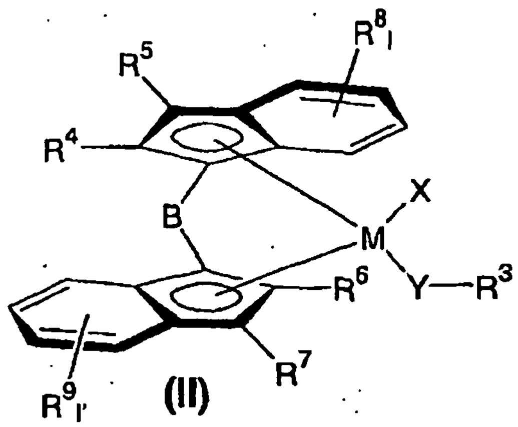

(II)

where

M is Ti, Zr or Hf,
$R^3$ is $C_7$-$C_{30}$-alkylaryl, fluorinated $C_6$-$C_{24}$-aryl or fluorinated $C_7$-$C_{30}$-alkylaryl,
$R^4$, $R^6$ are identical or different and are each a hydrogen atom or a carbon-containing $C_1$-$C_{20}$-group,
$R^5$, $R^7$ are identical or different and are each a hydrogen atom or a carbon-containing $C_1$-$C_{20}$-group,
$R^8$,$R^9$ are identical or different and are each a hydrogen atom, a halogen atom or a carbon-containing $C_1$-$C_{20}$-group, and two radicals $R^8$ or $R^9$ may form a monocyclic or polycyclic ring system which may in turn be substituted,
X is a halogen atom,
Y is oxygen,
1, 1' are identical or different and are each an integer from zero to 4,
B is a bridging structural element between the two indenyl radicals.

**3.** The compound according to claim 2, wherein, in the formula (II),

M is zirconium,
$R^3$ is $C_7$-$C_{30}$-alkylaryl, fluorinated $C_6$-$C_{29}$-aryl or fluorinated $C_7$-$C_{30}$-alkylaryl,
$R^4$, $R^6$ are identical or different and are each a hydrogen atom, $C_1$-$C_{18}$-alkyl, $C_2$-$C_{10}$-alkenyl, $C_3$-$C_{15}$-alkylalkenyl, $C_6$-$C_{18}$-aryl, $C_5$-$C_{18}$-heteroaryl, $C_7$-$C_{20}$-arylalkyl, $C_7$-$C_{20}$-alkylaryl, fluorinated $C_1$-$C_{12}$-alkyl, fluorinated $C_6$-$C_{18}$-aryl, fluorinated $C_7$-$C_{20}$-arylalkyl or fluorinated $C_7$-$C_{20}$-alkylaryl,
$R^5$ $R^7$ are identical or different and are each a hydrogen atom, $C_1$-$C_{18}$-alkyl, $C_2$-$C_{10}$-alkenyl, $C_3$-$C_{15}$-alkylalkenyl, $C_6$-$C_{18}$-aryl, $C_5$-$C_{18}$-heteroaryl, $C_7$-$C_{20}$-arylalkyl, $C_7$-$C_{20}$-alkylaryl, fluorinated $C_1$-$C_{12}$-alkyl, fluorinated $C_6$-$C_{18}$-aryl, fluorinated $C_7$-$C_{20}$-arylalkyl or fluorinated $C_7$-$C_{20}$-alkylaryl,
$R^8$, $R^9$ X are identical or different and are each a hydrogen atom, a halogen atom, a linear or branched $C_1$-$C_{18}$-alkyl group, $C_2$-$C_{10}$-alkenyl, $C_3$-$C_{15}$-alkylalkenyl, a $C_6$-$C_{18}$-aryl group which may be substituted if appropriate, $C_5$-$C_{18}$-heteroaryl, $C_7$-$C_{20}$-arylalkyl, $C_7$-$C_{20}$-alkylaryl, fluorinated $C_1$-$C_{12}$-alkyl, fluorinated $C_6$-$C_{18}$-aryl, fluorinated $C_7$-$C_{20}$-arylalkyl or fluorinated $C_7$-$C_{20}$-alkylaryl, and two radicals $R^8$ or $R^9$ may form a monocyclic or polycyclic ring system which may in turn be substituted if appropriate, is chlorine,
Y is oxygen,
1, 1' are identical or different and are each 1 or 2,
B is a bridging structural element between the two indenyl radicals.

**4.** A catalyst comprising at least one compound according to claim 1 and a support and, if appropriate, a cocatalyst.

**5.** A process for preparing a polyolefin in the presence of a catalyst according to claim 4.

**6.** The use of a catalyst according to claim 4 for olefin polymerization.

## Revendications

1. Composés de la formule (I)

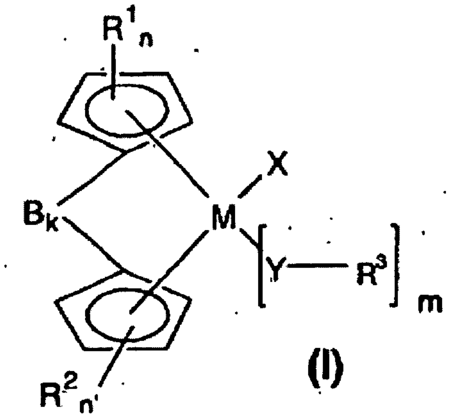

(I)

dans laquelle
M est Ti, Zr ou Hf,
$R^1$ sont identiques ou différents et est un radical $Si(R^{12})_3$, $R^{12}$, étant, identique ou différent, un atome d'hydrogène ou un groupement carboné en $C_1$-$C_{40}$, ou $R^1$ est un groupement carboné en $C_1$-$C_{30}$ ou deux ou plusieurs radicaux $R^1$ peuvent être reliés les uns aux autres de telle sorte que les radicaux $R^1$ et les atomes du cycle cyclopentadiényle qui les relient forment un système cyclique en $C_4$-$C_{24}$, qui peut, à son tour, être substitué,
$R^2$ sont identiques ou différents et est le radical Si $(R^{12})_3$, $R^{12}$ étant, identique ou différent, un atome d'hydrogène ou un groupement carboné en $C_1$-$C_{40}$ ou $R^2$ est un groupement carboné en $C_1$-$C_{30}$ ou, deux ou plusieurs radicaux $R^2$ peuvent être reliés les uns aux autres de telle sorte que les radicaux $R^2$ et les atomes du cycle cyclopentadiényle qui les relient forment un système cyclique en $C_4$-$C_{24}$, qui peut, à son tour, être substitué,
$R^3$ est identique à un alkylaryle en $C_7$-$C_{30}$, un aryle fluoré en $C_6$-$C_{24}$ ou un alkylaryle fluoré en $C_7$-$C_{30}$,
X est un atome d'halogène,
Y est de l'oxygène,
n est égal à 0 à 4,
n' est égal à 0 à 4,
m est égal à 1,
k est égal à 1,
B désigne un élément de structure faisant pontage entre les deux cycles cyclopentadiényle et un ou les deux cycles cyclopentadiényle sont substitués de telle sorte qu'ils représentent un cycle indényle.

2. Composés selon la revendication 1, **caractérisés en ce que** la formule (I) correspond à la formule (II),

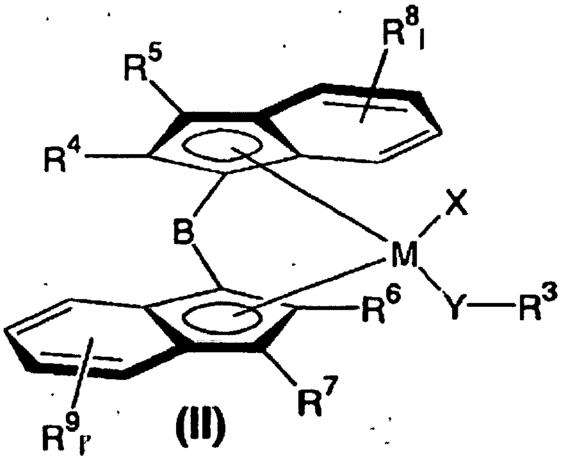

(II)

dans laquelle
M est égal à Ti, Zr ou Hf,
$R^3$ est un alkylaryle en $C_7$-$C_{30}$, un aryle fluoré en $C_5$-$C_{24}$ ou un alkylaryle fluoré en $C_7$-$C_{30}$,
$R^4$, $R^6$ sont identiques ou différents et sont un atome d'hydrogène, un groupement carboné en $C_1$-$C_{20}$,
$R^5$, $R^7$ sont identiques ou différents et sont un atome d'hydrogène, un groupement carboné en $C_1$-$C_{20}$,
$R^8$, $R^9$ sont identiques ou différents et
signifient un atome d'hydrogène, un atome d'halogène ou un groupement carboné en $C_1$-$C_{20}$, et les deux radicaux $R^8$ ou $R^9$ peuvent former un système de cycles mono ou polycyclique, qui peut, le cas échéant, être substitué à son tour,
X est un atome d'halogène,
Y est de l'oxygène,
1, l'identiques ou différents, sont un nombre entier compris entre zéro et 4,
B désigne un élément de structure faisant pontage entre les deux radicaux indényle.

**3.** Composés selon la revendication 2, **caractérisé en ce que**, dans la formule (II),
M est du zirconium,
$R^3$ est un alkylaryle en $C_7$-$C_{30}$, un aryle fluoré en $C_6$-$C_{24}$ ou un alkylaryle fluoré en $C_7$-$C_{30}$,
$R^4$, $R^6$ sont identiques ou différents et sont un atome d'hydrogène, un alkyle en $C_1$-$C_{18}$, un alcényle en $C_2$-$C_{10}$, un alkylalcényle en $C_3$-$C_{15}$, un aryle en $C_6$-$C_{18}$, un hétéroaryle en $C_5$-$C_{18}$, un arylalkyle en $C_7$-$C_{20}$, un alkylaryle en $C_7$-$C_{20}$, un alkyle fluoré en $C_1$-$C_{12}$, un aryle fluoré en $C_6$-$C_{18}$, un arylalkyle fluoré en $C_7$-$C_{20}$ ou un alkylaryle fluoré en $C_7$-$C_{20}$,
$R^5$, $R^7$ sont identiques ou différents et sont un atome d'hydrogène, un alkyle en $C_1$-$C_{18}$, un alcényle en $C_2$-$C_{10}$, un alkylalcényle en $C_3$-$C_{15}$, un aryle en $C_6$-$C_{18}$, d'hétéroaryle en $C_5$-$C_{18}$, d'arylalkyle en $C_7$-$C_{20}$, un alkylaryle en $C_7$-$C_{20}$, un alkyle fluoré en $C_1$-$C_{12}$, un aryle fluoré en $C_6$-$C_{18}$, un arylalkyle fluoré en $C_7$-$C_{20}$ ou un alkylaryle en $C_7$-$C_{20}$,
$R^8$, $R^9$ sont identiques ou différents et sont un atome d'hydrogène, un atome d'halogène, un alkyle en $C_1$-$C_{18}$, linéaire ou ramifié, un alcényle en $C_2$-$C_{10}$, un alkylalcényle $C_3$-$C_{15}$, un aryle en $C_6$-$C_{18}$, qui peut être, le cas échéant, substitué, un hétéroaryle en $C_5$-$C_{18}$, un arylalkyle en $C_7$-$C_{20}$, un alkylaryle en $C_7$-$C_{20}$, un alkyle fluoré en $C_1$-$C_{12}$, un aryle fluoré en $C_6$-$C_{18}$, un arylalkyle fluoré en $C_7$-$C_{20}$ ou un alkylaryle fluoré en $C_7$-$C_{20}$ et les deux radicaux $R^8$ ou $R^9$ peuvent former un système de cycles monocyclique ou polycyclique, qui peut, à son tour, le cas échéant, être substitué,
X est du chlore,
Y est de l'oxygène,
1, l'identiques ou différents, sont un nombre entier 1 ou 2,
B désigne un élément de structure faisant pontage entre les deux radicaux indényle.

**4.** Catalyseur contenant au moins un composé selon la revendication 1 et un vecteur ainsi que, le cas échéant, un co-catalyseur.

**5.** Procédé pour la fabrication d'une polyoléfine en présence d'un catalyseur selon la revendication 4.

**6.** Utilisation d'un catalyseur selon la revendication 4 pour la polymérisation d'oléfines.